# EUROPEAN PATENT APPLICATION

(11) **EP 4 773 679 A1**
(43) Date of publication of application: **08.07.2026**
(21) Application number: 23950261.0
(22) Date of filing: 31.08.2023
(51) Int. Cl.: H04W 52/02

(54) **WAKE-UP METHOD AND APPARATUS, DEVICE, AND STORAGE MEDIUM**

(71) Applicant: GUANGDONG OPPO MOBILE TELECOMMUNICATIONS CORP., LTD., Dongguan, Guangdong 523860 (CN)
(72) Inventor: ZUO, Zhisong, Dongguan, Guangdong 523860 (CN); HE, Chuanfeng, Dongguan, Guangdong 523860 (CN)
(74) Representative: Novagraaf Technologies
(86) International application number: PCT/CN2023/116368
(87) International publication number: WO 2025/043682

(57) **Abstract**

The present application relates to the field of low power consumption, and discloses a wake-up method and apparatus, a device, and a medium. The method is executed by a network device, and the method comprises: sending a first signal and a second signal, wherein the first signal and the second signal are used for waking up a main receiver of a low-power-consumption device, and the second signal carries wake-up information. The main receiver of the low-power-consumption device is woken up by sending the first signal and the second signal, thereby guaranteeing the transmission quality of the second signal and further guaranteeing the transmission quality and reliability of the wake-up information.

## Description

### TECHNICAL FIELD

The present disclose relates to the field of low power consumption, and in particular, relates to a wake-up method and apparatus, a device, and a storage medium thereof.

### RELATED ART

A wake-up signal (WUS) received by a low-power device typically adopts a simple waveform for transmission, and has characteristics of low-power reception and low-power detection. However, such simple waveforms are prone to demodulation and decoding errors, which is not conducive to transmission of wake-up information.

Therefore, how to improve transmission quality of the wake-up information is a problem to be solved.

### SUMMARY

The present disclosure provides a wake-up method and apparatus, a device, and medium thereof. The technical solutions at least include the following contents.

According to some embodiments of the present disclosure, a wake-up method is provided. The method is performed by a network device, and includes:
transmitting a first signal and a second signal, wherein the first signal and the second signal are used to wake up a primary receiver of a low-power device, and the second signal carries wake-up information.

According to some embodiments of the present disclosure, a wake-up method is provided. The method is performed by a low-power device, and includes:
receiving a first signal and a second signal, wherein the first signal and the second signal are used to wake up a primary receiver of the low-power device, and the second signal carries wake-up information.

According to some embodiments of the present disclosure, a wake-up apparatus is provided. The apparatus includes:
a transmitting module, configured to transmit a first signal and a second signal, wherein the first signal and the second signal are used to wake up a primary receiver of a low-power device, and the second signal carries wake-up information.

According to some embodiments of the present disclosure, a wake-up apparatus is provided. The apparatus includes:
a first receiving module, configured to receive a first signal and a second signal, wherein the first signal and the second signal are used to wake up a primary receiver of the low-power device, and the second signal carries wake-up information.

According to some embodiments of the present disclosure, a network device is provided. The network device includes:
a processor;
a transmitter communicably connected to the processor; and
a memory, configured to store one or more instructions executable by the processor;
wherein the transmitter is configured to transmit a first signal and a second signal, wherein the first signal and the second signal are used to wake up a primary receiver of a low-power device, and the second signal carries wake-up information.

According to some embodiments of the present disclosure, a low-power device is provided. The low-power device includes a first receiver,
wherein the first receiver is configured to receive a first signal and a second signal, wherein the first signal and the second signal are used to wake up a primary receiver of the low-power device, and the second signal carries wake-up information.

According to some embodiments of the present disclosure, a computer-readable storage medium is provided. The computer-readable storage medium stores one or more executable instructions, wherein the one or more executable instructions, when loaded and executed by a processor, cause the processor to perform the wake-up method as described above.

According to some embodiments of the present disclosure, a computer program product is provided. The computer program product includes one or more computer instructions stored in a computer-readable storage medium. The one or more computer instructions, when read by a processor of a computer device from the computer-readable storage medium and executed by the processor, cause the computer device to perform the wake-up method as described above.

According to some embodiments of the present disclosure, a chip is provided. The chip includes programmable logic circuitry and/or one or more program instructions. The chip, when running, is configured to perform the wake-up method as described above.

According to some embodiments of the present disclosure, a computer program is provided. The computer program includes one or more computer instructions. The one or more computer instructions, when executed by a processor of a computer device, cause the computer device to perform the wake-up method as described above.

The technical solutions according to the embodiments of the present disclosure may achieve the following beneficial effects.

The network device wakes up the primary receiver of the low-power device by transmitting the first signal and the second signal. The first signal is provided in addition to the second signal carrying the wake-up information to wake up the primary receiver, such that the primary receiver acquires more information for wake-up, thereby significantly improving the wake-up success rate and efficiency of the low-power device.

### BRIEF DESCRIPTION OF DRAWINGS

For clearer illustration of the technical solutions according to the embodiments of the present disclosure, the drawings required in the description of the embodiments are described hereinafter briefly. Obviously, the drawings described herein are only some of the embodiments of the present disclosure. A person of ordinary skill in the art may derive other drawings based on these drawings without any creative efforts.
FIG. 1 is a schematic diagram of a receiver according to some embodiments of the present disclosure;
FIG. 2 is a schematic diagram of a discontinuous reception (DRX) state in the related art;
FIG. 3 is a schematic diagram of a low-power communication system according to some embodiments of the present disclosure;
FIG. 4 is a schematic flowchart of a wake-up method and a schematic diagram of a receiving system of a low-power device according to some embodiments of the present disclosure;
FIG. 5 is a schematic flowchart of a wake-up method according to some embodiments of the present disclosure;
FIG. 6 is a schematic flowchart of a wake-up method according to some embodiments of the present disclosure;
FIG. 7 is a schematic diagram of generating a first signal according to some embodiments of the present disclosure;
FIG. 8 is a schematic diagram of generating a second signal according to some embodiments of the present disclosure;
FIG. 9 is a schematic diagram of a corresponding relationship between a first signal and a second signal according to some embodiments of the present disclosure;
FIG. 10 is a schematic diagram of a corresponding relationship between a first signal and a second signal according to some embodiments of the present disclosure;
FIG. 11 is a schematic flowchart of a wake-up method according to some embodiments of the present disclosure;
FIG. 12 is a schematic flowchart of a wake-up method according to some embodiments of the present disclosure;
FIG. 13 is a schematic flowchart of a wake-up method according to some embodiments of the present disclosure;
FIG. 14 is a schematic flowchart of a wake-up method according to some embodiments of the present disclosure;
FIG. 15 is a structural block diagram of a wake-up apparatus according to some embodiments of the present disclosure;
FIG. 16 is a structural block diagram of a wake-up apparatus according to some embodiments of the present disclosure;
FIG. 17 is a structural schematic diagram of a network device according to some embodiments of the present disclosure; and
FIG. 18 is a structural schematic diagram of a low-power device according to some embodiments of the present disclosure.

### DETAILED DESCRIPTION

For clearer descriptions of the objectives, technical solutions, and advantages of the present disclosure, the embodiments of the present disclosure are described hereinafter in detail with reference to the drawings. The exemplary embodiments are described in detail here, and their examples are shown in the accompanying drawings. When the following description relates to the accompanying drawings, the same reference numerals in different drawings represent the same or similar elements, unless otherwise indicated. The embodiments described in the following exemplary embodiments do not represent all the embodiments consistent with the present disclosure. Rather, these embodiments are merely examples of devices and methods that are consistent with some aspects of the present disclosure as detailed in the appended claims.

The terms used in the present disclosure are solely for the purpose of describing specific embodiments and are not intended to limit the present disclosure. The singular forms "a," "an," and "the" used in the present disclosure and the appended claims are also intended to encompass their plural forms, unless the context clearly indicates otherwise. It should be understood that the term "and/or" as used herein refers to and includes any or all possible combinations of one or more of associated listed items.

It should be understood that although terms such as "first," "second," and "third" may be used in the present disclosure to describe various information, such information should not be limited by these terms. These terms are only used to distinguish information of the same type from each other. For example, without departing from the scope of the present disclosure, first information may also be referred to as second information, and similarly, second information may also be referred to as first information. The term "in a case where" as used herein may be interpreted as "when," "upon," or "in response to determining" depending on the context.

First, communication technologies involved in the embodiments of the present disclosure are introduced hereinafter.

Generally, a terminal device is equipped with a receiver. The terminal device receives signals and data using the receiver. In this case, this receiver is required to remain active for a long time, or even monitor continuously, to meet communication requirements. However, such a receiver operates at relatively high power, and the power consumption caused by the long-time activation or continuous monitoring is very huge. Obviously, the power consumption problem of terminal devices cannot be ignored and requires to be solved.

A DRX transmission mechanism is a communication technology for reducing the power consumption of terminal devices. A main principle of this mechanism is to configure a DRX cycle for a terminal device in a radio resource control connected (RRC_Connected) state, and to realize discontinuous reception of the terminal device in a time domain using the DRX cycle. The DRX cycle includes active time and inactive time. The active time occurs upon activation of the DRX, or during running of an inactivity timer, or during a period when the inactive timer has not yet expired. The active time may also be referred to as an "on duration," and the inactive time may also be referred to as an "off duration" or an "opportunity for DRX."

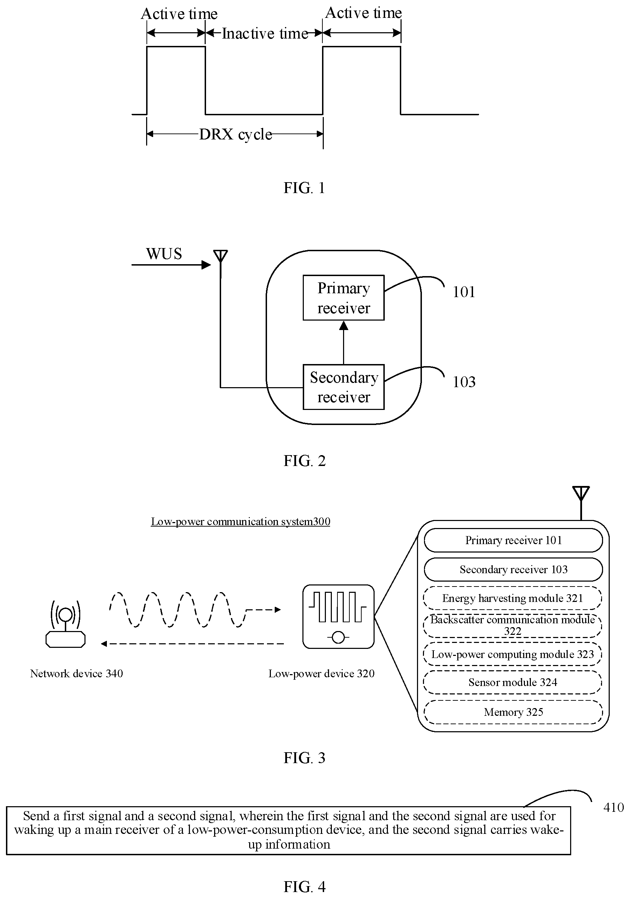

As illustrated in FIG. 1, a terminal device applying the DRX transmission mechanism wakes up in each DRX cycle, and monitors and receives signals or data over a physical downlink control channel (PDCCH) during the active time, or does not monitor or receive signals or data over the PDCCH during the inactive time to achieve the effect of reducing power consumption.

However, since the terminal device does not need receive signals or data in every DRX cycle, the terminal device waking up to monitor in each DRX cycle still results in some meaningless power consumption.

Therefore, for further reduction of the power consumption of the terminal device on the basis of the DRX transmission mechanism, a WUS mechanism is introduced to dynamically wake up the receiver of the terminal device. In a case where the receiver of the terminal device receives a WUS, the receiver wakes up in the next DRX cycle and monitors or receives signals or data over the PDCCH during the active time. In a case where the receiver of the terminal device does not receive the WUS, the receiver remains in a sleep state for the next one or more DRX cycles until the WUS is received. Such a design avoids the meaningless power consumption caused by the terminal device continuously and fixedly monitoring the PDCCH in each DRX cycle, and achieves further energy saving of the terminal device using the dynamic wake-up method.

In addition, equipping the terminal device with a secondary receiver is another communication technology that is applicable to reduce the power consumption of the terminal device. As illustrated in FIG. 2, on the basis of a receiver 101 in the terminal device, another receiver 103 is introduced. For the convenience of distinction, the receiver 101 may be referred to as a primary receiver 101 or a first receiver 101, and the receiver 103 may be referred to as a secondary receiver 103, a second receiver 103, or a wake-up receiver (WUR) 103. In the present disclosure, the terms "primary receiver 101" and "secondary receiver 103" are used for reference, but this does not imply any limitation on the naming. The power consumption of the secondary receiver 103 is significantly lower than the power consumption of the receiver 101. The newly introduced secondary receiver 103 may receive a part of signals in place of the primary receiver 101. That is, some operations originally required to be performed by the primary receiver 101 may now be performed by the primary receiver 103. Moreover, the primary receiver 101 may remain turned off until the primary receiver 101 is instructed to be turned on by the secondary receiver 103, such that meaningless power consumption of the primary receiver 101 is prevented in a case where no signal or data reception is required for the primary receiver 101. Due to the lower power consumption of the secondary receiver 103, replacement of the primary receiver by the secondary receiver may significantly reduce the overall power consumption of the terminal device, thereby achieving energy saving for the terminal device.

Obviously, a combination of the DRX transmission mechanism, the WUS mechanism, and the secondary receiver may achieve a better energy-saving effect. In a case where the secondary receiver 103 receives the WUS, the primary receiver 101 is woken up dynamically. In a case where the secondary receiver 103 does not receive the WUS, the primary receiver 101 is not woken up but remains in an off state. Unlike the primary receiver 101, which requires to be turned on or off to achieve power saving, the secondary receiver 103 may be activated by the WUS at any time to receive wake-up information. Compared to the scheme where the primary receiver 101 receives the WUS, the WUS reception by the secondary receiver 103 may further reduce power consumption. Therefore, the low power of the secondary receiver 103 may further improve the energy-saving effect of the DRX transmission mechanism and the WUS mechanism, and further reduce the overall power consumption of the terminal device.

During a design process of the secondary receiver 103, an extremely simple hardware design is typically adopted to realize the low-power characteristic of the secondary receiver 103. Signals received by the secondary receiver 103 are mostly simple waveforms. In a case where the secondary receiver 103 is configured to receive the WUS for the energy-saving effect, the WUS also requires to be transmitted with a simple waveform, such as an envelope signal formed by the WUS via amplitude shift keying (ASK) modulation.

The envelope signal may be demodulated by an induced current generated by electromagnetic induction driving a low-power circuit, or by energy provided by a radio frequency (RF) signal driving a low-power circuit. Therefore, the terminal device including the secondary receiver 103 may be passive or semi-passive. The demodulation of the envelope signal may also be completed by a built-in battery or a power supply system of the device. Therefore, the terminal device including the secondary receiver 103 may also be active.

The secondary receiver 103 may be incorporated with the primary receiver 101 and serve as an additional module of the primary receiver 101. Alternatively, the secondary receiver 103 may serve as a separate module of the terminal device, such as a wake-up functional module.

However, the simple waveforms received by the secondary receiver 103 are prone to significant demodulation errors and decoding errors, which are highly detrimental to the transmission quality of the wake-up information carried by the WUS.

A low-power communication system 300 is exemplarily introduced hereinafter. As illustrated in FIG. 3, the low-power communication system 300 includes a low-power device 320 and a network device 340.

The low-power device 320 includes the primary receiver 101 and the secondary receiver 103 as illustrated in FIG. 2. In some embodiments, the low-power device 320 further includes an energy harvesting module 321. In some embodiments, the low-power device 320 further includes a backscatter communication module 322. In some embodiments, the low-power device 320 further includes a low-power computing module 323. In some embodiments, the low-power device 320 further includes a sensor module 324. In some embodiments, the low-power device 320 further includes a memory 325. In some embodiments, in addition to the primary receiver 101 and the secondary receiver 103, the low-power device 320 further includes one or more of the energy harvesting module 321, the backscatter communication module 322, the low-power computing module 323, the sensor module 324, or the memory 325.

Exemplarily, the energy harvesting module 321 may harvest energy carried by radio waves in space to supply energy for driving various modules of the low-power device 320. The low-power device 320, upon harvesting energy, may receive signals from the network device 340 using the secondary receiver 103 and the primary receiver 101, and may also transmit data to the network device 340 using the backscatter communication module 322. The data from the low-power device 320 may be data stored in the low-power device 320, such as an identity identifier or pre-written information, e.g., a production date, a brand, or a manufacturer of a product. The sensor module 324 may include various sensors. The low-power device 320 may report data acquired by various sensors based on a low-power mechanism. The memory 325 is configured to store some basic information, such as item identifiers, or acquire sensing data such as ambient temperature or ambient humidity.

The low-power device 320 may adopt the low-power computing module 323 to implement simple operations such as signal demodulation, decoding, encoding, and modulation. This allows for an extremely simple hardware design, such that the low-power device 320 is produced at low cost and having a compact size.

It should be understood that the modules included in the low-power device 320 in FIG. 3 are for illustrative purposes only and not intended as limitations.

Considering energy sources and usage modes of the low-power device 320, the low-power device 320 may be implemented as a passive device, a semi-passive device, or an active device.

The passive device does not require a built-in battery, but generates an induced current via electromagnetic induction to drive the operation of various modules in the device. The semi-passive device does not have a conventional battery installed, but may use a RF energy harvesting module to harvest radio wave energy, and store the harvested energy in an energy storage unit, such as a capacitor. Upon acquiring the energy, the energy storage unit drives the operation of various modules in the semi-passive device. The active device may have a built-in battery, and the battery drives the operation of various modules in the device.

Considering the type of transmitter of the low-power device 320, the low-power device 320 may be implemented as a device based on backscatter, a device based on an active transmitter, or a device incorporating both backscatter and an active transmitter.

The device based on backscatter does not have an active transmitter with active transmission capabilities, but only has a backscatter transmitter. The device based on an active transmitter uses an active transmitter with active transmission capabilities for uplink data transmission. The active transmitter may be, for example, an ultra-low-power ASK transmitter, an ultra-low-power frequency shift keying (FSK) transmitter, or the like. The device incorporating both backscatter and an active transmitter may support both backscatter and an active transmitter. Such a low-power device may determine whether to use the backscatter mode or the active transmitter for active transmission according to different situations (such as different power levels, different available environmental energy situations) or based on scheduling of the network device.

The low-power device 320 may also be referred to as an ultra-low-power device, a zero-power device, a passive Internet of things (IoT) device, or an ambient power enabled IoT (abbreviated as "ambient IoT/A-IoT") device.

The low-power device 320 includes but is not limited to: a handheld device, a wearable device, a vehicle-mounted device, an IoT device, and the like. The low-power device 320 may be at least one of a mobile phone, a tablet computer, an e-book reader, a laptop computer, a desktop computer, a television, a game console, an augmented reality (AR) terminal, a virtual reality (VR) terminal, a mixed reality (MR) terminal, a wearable device, a handle, an electronic tag, a controller, or the like.

The network device 340 may transmit one or more of wireless power supply signals, downlink communication signals, or data to the low-power device 320, and may also receive signals and/or data from the low-power device 320. The signal from the low-power device 320 may be a signal actively transmitted by the low-power device 320 or a backscatter signal.

The network device 340 includes, but is not limited to: a cellular network device (such as a network device/base station device in a 5^{th} generation (5G) mobile communication system, a network device/base station device in a 6^{th} generation (6G) mobile communication system, a network device/base station device in a beyond fifth generation (B5G) mobile communication system), a network device in a wireless fidelity (Wi-Fi) system, a network device in a wireless local area network (WLAN) system (such as an access point (AP), a router, a mobile AP, or the like). The mobile AP is, for example, a mobile phone, or a reader/writer of a radio frequency identification (RFID) system.

The technical solutions according to some embodiments of the present disclosure are applicable to various communication systems, such as a global system for mobile communication (GSM) system, a code-division multiple access (CDMA) system, a wideband code-division multiple access (WCDMA) system, a general packet radio service (GPRS) system, a long-term evolution (LTE) system, an advanced LTE (LTE-A) system, a new radio (NR) system, an evolved system of the NR system, an LTE-based access to unlicensed spectrum (LTE-U) system, an NR-based access to unlicensed spectrum (NR-U) system, a non-terrestrial network (NTN) system, a universal mobile telecommunication system (UMTS), a WLAN system, a Wi-Fi system, a 5G system, a B5G system, a 6G system, a cellular IoT system, and a cellular passive IoT system. The technical solutions are also applicable to an evolution system subsequent to the 5G system, as well as 6G and subsequent evolution systems. Herein, "5G" may also be referred to as "5G NR" or "NR."

The technical solutions according to the embodiments of the present disclosure may also applicable to machine-type communications (MTC), a long-term evolution-machine (LTE-M) technology, a device-to-device (D2D) network, a machine-to-machine (M2M) network, an IoT network, or other networks. The IoT network includes, for example, Internet of vehicles. Communication modes in the Internet of vehicles system are collectively referred to as vehicle-to-X (i.e., V2X, where X may represent any object). For example, the V2X may include: vehicle-to-vehicle (V2V) communications, vehicle-to-infrastructure (V2I) communications, vehicle-to-pedestrian (V2P) communications, vehicle-to-network (V2N) communications, or the like.

It should be understood that in the description of the embodiments of the present disclosure, the term "corresponding" may indicate a direct corresponding relationship or an indirect corresponding relationship between two items, or an association between the two items, or a relationship such as indicating and being indicated, configuring and being configured, or the like.

In the embodiments of the present disclosure, a "predefined" operation may be performed by pre-storing corresponding codes or tables in a communication device (such as a low-power device and a network device), or may be performed by other means that may be used to indicate relevant information. The present disclosure does not impose any restrictions on specific methods for performing the predefined operation. For example, the predefined operation may be defined or specified in a protocol.

FIG. 4 is a schematic flowchart of a wake-up method according to some embodiments of the present disclosure. The method is performed by the network device as illustrated in FIG. 1 or FIG. 3, and the method includes the following step.

**In step 410,** the network device transmits a first signal and a second signal, wherein the first signal and the second signal are used to wake up a primary receiver of a low-power device, and the second signal carries wake-up information.

The low-power device may be the terminal device as illustrated in FIG. 1 or FIG. 3.

In some embodiments, the second signal carries wake-up information. In some embodiments, the wake-up information is implemented as indication information.

In some embodiments, the wake-up information carried by the second signal is used to wake up a primary receiver of one low-power device, or primary receivers of a plurality of low-power devices.

In some embodiments, the wake-up information carried by the second signal is used to instruct a secondary receiver of the low-power device to wake up the primary receiver, or to instruct a secondary receiver of the low-power device to activate the primary receiver.

In some embodiments, the first signal is associated with the second signal. Exemplarily, the reception of the second signal is associated with the first signal, and/or the detection of the second signal is associated with the first signal.

In view of the above, in the method according to the embodiments of the present disclosure, the network device wakes up the primary receiver of the low-power device by transmitting the first signal and the second signal. The first signal is provided in addition to the second signal carrying the wake-up information to wake up the primary receiver, such that the primary receiver acquires more information for wake-up, thereby significantly improving the wake-up success rate and efficiency of the low-power device.

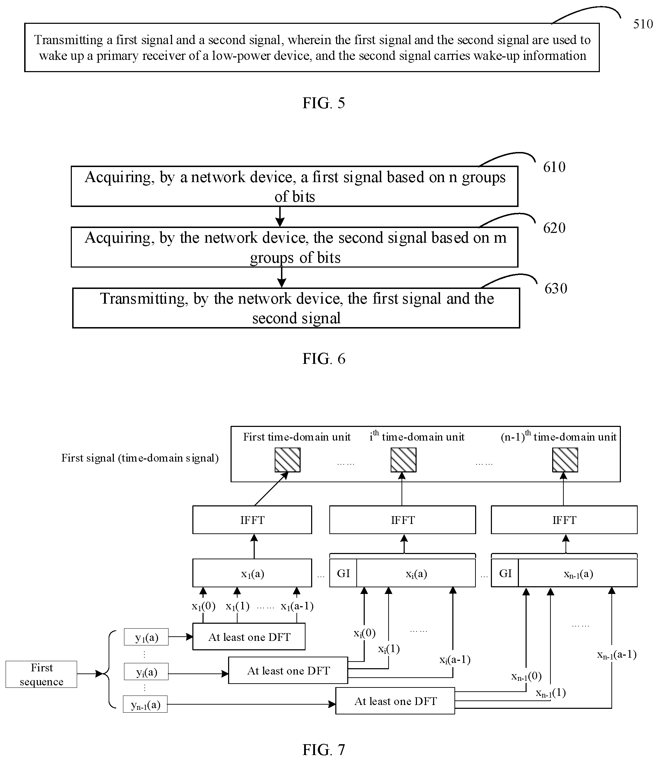

In some embodiments, step 410 may also be implemented as step 510, as illustrated in FIG. 5. FIG. 5 is a schematic flowchart of a wake-up method according to some embodiments of the present disclosure. The method is performed by the network device as illustrated in FIG. 1, FIG. 3, or FIG. 4, and the method includes the following step.

**In step 510,** the network device transmits a first signal and a second signal, wherein the first signal and the second signal are used to wake up a primary receiver of a low-power device, and the second signal carries wake-up information.

In some embodiments, an association is present between the first signal and the second signal. The first signal and the second signal are used to wake up the primary receiver of the low-power device. This specifically means that the first signal and the associated second signal are jointly used to wake up the primary receiver of the low-power device. The second signal is mainly used to carry the wake-up information. Exemplarily, the first signal may be used to assist the reception and/or detection of the second signal.

In some embodiments, the first signal is periodically transmitted. A transmission period of the first signal may be fixed or variable. That is, durations of different transmission periods of the first signal may be the same or different. The transmission period of the first signal may be specifically configured by the network device, determined by the low-power device, or determined via negotiation by the network device and the low-power device, which is not limited in the present disclosure.

In some embodiments, the association between the first signal and the second signal in the present disclosure may specifically be a relationship between the transmission period of the first signal and the second signal. For example, within each transmission period of the first signal, the network device may transmit one second signal or a plurality of second signals. In a case where the network device has no demand for waking up the low-power device within a particular transmission period, the network device may not transmit the second signal within this transmission period. The first signal within each transmission period is used to wake up the low-power device together with the second signal within the transmission period.

In some embodiments, durations of different transmission periods of the first signal are the same or different.

In some embodiments, within each transmission period of the first signal, the network device transmits one second signal. This allows a more appropriate and targeted first signal to be provided for each second signal, improves the association accuracy between the first signal and the second signal, and helps to improve the transmission quality of the wake-up information carried by each second signal in a targeted manner.

In some embodiments, within each transmission period of the first signal, the network device transmits a plurality of second signals. This saves the quantity of transmissions of the first signal, improves the association efficiency of the first signal, saves the time for waking up the target terminal, and supports ensuring the demodulation performance and decoding performance for more second signals in a case where the first signal consumes fewer transmission resources, thereby improving the wake-up efficiency.

In some embodiments, in a case where the network device transmits a plurality of second signals within a particular transmission period, the plurality of second signals may be used to wake up the same terminal or terminal group. By repeating the transmission of the second signal a plurality of times for the same terminal or terminal group within one transmission period, the reception success rate of the second signal may be improved, thereby improving the success rate of waking up the primary receiver.

In other embodiments, in a case where the network device transmits a plurality of second signals within a particular transmission period, the plurality of second signals may be used to wake up different terminals or terminal groups. A terminal that receives the second signals may determine whether any of the plurality of second signals is intended for the terminal based on one or more of a terminal identifier (ID), a terminal group ID, a terminal group index, or the like carried by each second signal. Alternatively, a terminal that receives the second signals may determine whether any of the plurality of second signals is intended for the terminal based on one or more of a terminal ID, a terminal group ID, a terminal group index, a second signal index, a second signal ID, or the like carried by the first signal associated with the second signals. By transmitting the wake-up information for the plurality of terminals or terminal groups within one transmission period, the efficiency of the transmission of the wake-up information may be improved, and the quantity of transmitted signals and the time for waking up the target terminal may be saved.

In some embodiments, a plurality of first signals are present within a transmission period, wherein each of the plurality of first signals is associated with a portion of second signals within the transmission period, and the second signals associated with different first signals are different or overlapping.

In some embodiments, a time-domain resource of the first signal includes n time-domain units, wherein n is an integer greater than or equal to 1.

The time-domain unit includes at least one of a frame, a subframe, a slot, a mini-slot, a sub-slot, a symbol, a symbol group, or an element based on another time-domain unit.

The symbol includes at least one of an orthogonal frequency-division multiplexing (OFDM) symbol, a quadrature phase shift keying (QPSK) symbol, an ASK symbol, an FSK symbol, an on-off keying (OOK) symbol, or a multi-carrier OOK (MC-OOK) symbol.

In some embodiments, the first signal is generated by performing a first transform on n groups of first frequency-domain signals respectively. The n time-domain units are in one-to-one correspondence with the n groups of first frequency-domain signals. The first transform refers to a transform of the signal from a frequency domain to a time domain.

In some embodiments, the first transform includes one of an inverse Fourier transform (IFT), an inverse fast Fourier transform (IFFT), an inverse Laplace transform, an inverse z-transform, another transform equivalent to the IFT, another transform equivalent to the IFFT, another transform equivalent to the inverse Laplace transform, or another transform equivalent to the inverse z-transform. Herein, "equivalent" means that two transform methods achieve the same effect, two transform methods have the same principle, or two transform methods have the same calculation process.

In some embodiments, the n groups of first frequency-domain signals are generated by performing a second transform on n groups of bits respectively. The second transform refers to a transform of the signal from the time domain to the frequency domain. A group of bits in the n groups of bits includes one or more bits.

In some embodiments, the second transform includes one of a Fourier transform (FT), a fast FT (FFT), a discrete FT (DFT), a Laplace transform, a z-transform, another transform equivalent to the FT, another transform equivalent to the FFT, another transform equivalent to the Laplace transform, or another transform equivalent to the z-transform. Herein, "equivalent" means that two transform methods achieve the same effect, two transform methods have the same principle, or two transform methods have the same calculation process.

In some embodiments, the first signal is generated by performing modulation on n groups of bits respectively. The n time-domain units are in one-to-one correspondence with the n groups of bits.

In some embodiments, the first signal is periodically or aperiodically transmitted.

In some embodiments, the second signal carries the wake-up information. In some embodiments, the wake-up information is implemented as indication information.

In some embodiments, the wake-up information carried by the second signal is used to wake up a primary receiver of one low-power device, or primary receivers of a plurality of low-power devices.

In some embodiments, the wake-up information carried by the second signal is used to instruct a secondary receiver of the low-power device to wake up the primary receiver, or to instruct a secondary receiver of the low-power device to activate the primary receiver.

In some embodiments, a time-domain resource of the second signal includes m time-domain units, wherein m is an integer greater than or equal to 1, and m is equal to or different from n.

In some embodiments, the second signal is generated by performing the first transform on m groups of second frequency-domain signals respectively, wherein the m time-domain units are in one-to-one correspondence with the m groups of second frequency-domain signals. The first transform refers to a transform of the signal from the frequency domain to the time domain.

In some embodiments, the m groups of second frequency-domain signals are generated by performing the second transform on m groups of bits respectively. A group pf bits in the m groups of bits includes one or more bits. The second transform refers to a transform of the signal from the time domain to the frequency domain.

In some embodiments, the second signal is generated by performing modulation on m groups of bits respectively, wherein the m time-domain units are in one-to-one correspondence with the m groups of bits. A group of bits in the m groups of bits includes one or more bits.

In some embodiments, the n time-domain units are different from the m time-domain units. That is, the time-domain resource of the first signal is different from the time-domain resource of the second signal. In some embodiments, the n time-domain units and the m time-domain units differ in at least one of the following aspects: quantities are different (i.e., n is not equal to m); a start position of the n time-domain units and a start position of the m time-domain units are different; or an end position of the n time-domain units and an end position of the m time-domain units are different.

In some embodiments, a frequency-domain resource of the first signal is different from a frequency-domain resource of the second signal. The frequency-domain resource of the first signal is referred to as a first frequency-domain resource, and the frequency-domain resource of the second signal is referred to as a second frequency-domain resource.

In some embodiments, the first frequency-domain resource and the second frequency-domain resource differ in at least one of the following aspects: a quantity of frequency-domain units included in the first frequency-domain resource and a quantity of frequency-domain units included in the second frequency-domain resource are different (a width of the first frequency-domain resource and a width of the second frequency-domain resource are different); a frequency-domain start position of the first frequency-domain resource and a frequency-domain start position of the second frequency-domain resource are different; or a frequency-domain end position of the first frequency-domain resource and a frequency-domain end position of the second frequency-domain resource are different.

In some embodiments, a center frequency point of the first frequency-domain resource is aligned with a center frequency point of the second frequency-domain resource; an upper frequency point of the first frequency-domain resource is aligned with an upper frequency point of the second frequency-domain resource; or a lower frequency point of the first frequency-domain resource is aligned with a lower frequency point of the second frequency-domain resource. Such a design simplifies the demodulation and decoding of the second signal.

The frequency-domain unit includes at least one of a carrier, a bandwidth part (BWP), a sub-band, a sub-channel, a physical resource block (PRB), a subcarrier, or an element based on another frequency-domain unit.

In some embodiments, a synchronization result and/or an automatic gain control (AGC) result of the first signal is used to assist the reception and/or detection of the second signal. Exemplarily, the synchronization result includes a time-domain synchronization result (or referred to as clock information) and/or a frequency-domain synchronization result (or referred to as a frequency offset estimation result).

In some embodiments, the time-domain synchronization result of the first signal is acquired based on an envelope-demodulation result of the first signal, and the reception and/or detection of the second signal is performed with reference to the time-domain synchronization result of the first signal. Exemplarily, based on the clock information acquired by performing envelope demodulation on the first signal, time-domain calibration is performed on the second signal, and the second signal is received and/or detected based on the calibrated time-domain resource.

In some embodiments, the frequency-domain synchronization result of the first signal is acquired based on a correlation detection result of the first signal, and the reception and/or detection of the second signal is performed with reference to the frequency-domain synchronization result of the first signal. Exemplarily, based on the clock information acquired by performing correlation detection on the first signal, frequency-domain calibration is performed on the second signal, and the second signal is received and/or detected based on the calibrated frequency-domain resource.

In some embodiments, the first signal is an auxiliary signal for the second signal; the first signal is a reference signal; the first signal is a measurement signal; or the first signal is a synchronization signal.

In some embodiments, a correspondence between the first signals and the second signals satisfies one of:
- the first signals being in one-to-one correspondence with the second signals, which may be understood as follows: one first signal is used to assist the reception and/or detection of one second signal;
- the first signals being in one-to-many correspondence with the second signals, which may be understood as follows: one first signal is used to assist the reception and/or detection of a plurality of second signals;
- the first signals being in one-to-one correspondence with the second signals within a period, which may be understand as follows: one first signal is used to assist the reception and/or detection of one second signal within the transmission period of the first signal; or
- the first signals being in one-to-many correspondence with the second signals within a period, which may be understood as follows: one first signal is used to assist the reception and/or detection of a plurality of second signals within the transmission period of the first signal.

Herein, "a period" refers to the transmission period of the first signal.

In view of the above, in the method according to the embodiments of the present disclosure, the network device wakes up the primary receiver of the low-power device by transmitting the first signal and the second signal. The first signal is provided in addition to the second signal carrying the wake-up information to wake up the primary receiver, such that the primary receiver acquires more information for wake-up, thereby effectively improving the demodulation performance and decoding performance of the second signal. In this way, the wake-up success rate and efficiency of the low-power device are significantly improved, and the transmission quality and reliability of the wake-up information are better ensured. In addition, a plurality of designs of the second signal within one transmission period of the first signal are provided, such that the method according to the embodiments of the present disclosure meets wake-up requirements in various communication scenarios. Repeatedly transmitting the second signal a plurality of times for the same terminal or terminal group within one transmission period helps to improve the reception success rate of the second signal, thereby improving the success rate of waking up the primary receiver. Alternatively, transmitting the wake-up information for a plurality of terminals or terminal groups within one transmission period improves the efficiency of transmitting the wake-up information, saves the quantities of transmitted signals and the time for waking up the target terminal, improves the overall efficiency of the communication system, and reduces the overall resource consumption of the communication system.

In some embodiments, step 510 may also be implemented as step 630. In addition to step 630, the wake-up method may further include at least one of step 610 or step 620, as illustrated in FIG. 6. FIG. 6 is a schematic flowchart of a wake-up method according to some embodiments of the present disclosure. The method is performed by the network device as illustrated in FIG. 1, FIG. 2, FIG. 3, FIG. 4, or FIG. 5, and the method includes the following steps.

**In step 610,** the network device acquires a first signal based on n groups of bits.

In some embodiments, the n groups of bits are acquired by dividing a first sequence. In some embodiments, the first sequence is specified by a communication protocol or generated by the network device. In some embodiments, the generation manner of the first sequence is specified by the communication protocol or determined by the network device.

In some embodiments, the first sequence is a random sequence, a pseudo-random sequence, or a preset sequence.

In some embodiments, a bit length of the first sequence is a length of one bit or a plurality of bits. That is, the first sequence corresponds to one or more bit positions, or the first sequence corresponds to one-bit information or multi-bit information. The embodiments of the present disclosure are described by an example where the bit length of the first sequence is the length of a plurality of bits.

In some embodiments, each of the n groups of bits includes one or more bits. In some embodiments, bit groups include the same quantity of bits, or different bit groups include different quantities of bits.

In some embodiments, the n groups of bits are respectively subjected to a second transform to generate n groups of first frequency-domain signals, and the n groups of first frequency-domain signals are in one-to-one correspondence with the n groups of bits. In some embodiments, another frequency-domain signal and/or a guard interval (GI) is present between different first frequency-domain signals. Herein, the "another frequency-domain signal" refers to a frequency-domain signal other than the first frequency-domain signal and a second frequency-domain signal.

Exemplarily, the other frequency-domain signal is a signal adopting an OFDM waveform, such as a measurement signal, a cell broadcast signal, a multicast signal, or the like.

In some embodiments, the n groups of first frequency-domain signals are respectively subjected to a first transform to generate the first signal. A time-domain resource of the first signal includes n time-domain units, and the n time-domain units are in one-to-one correspondence with the n groups of first frequency-domain signals.

Exemplarily, as illustrated in FIG. 7, the first signal corresponds to n groups of bits, and each of the n groups of bits may be represented by yᵢ(a), wherein i is equal to 0, 1... n-1. Exemplarily, a value of n is one of {1, 2, 4, 6, 8, 12, 16}, or n is another integer greater than 1.

In some embodiments, the quantities of bits included in different bit groups are the same or different. FIG. 7 is illustrated by an example where each bit group includes *a* bits.

In a case where the second transform is a DFT transform, an i^{th} first frequency-domain signal group xᵢ(a) is acquired by performing at least one DFT transform on an i^{th} bit group yᵢ(a). A total of n groups of first frequency-domain signals are acquired by respectively subjecting the n groups of bits to at least one DFT transform.

In a case where the first transform is an IFFT transform, the i^{th} first frequency-domain signal group xᵢ(a) is subjected to the IFFT transform and mapped to an i^{th} time-domain unit. The n groups of first frequency-domain signals are respectively subjected to the IFFT transform and mapped to a total of n time-domain units. That is, the n time-domain units are in one-to-one correspondence with the n groups of first frequency-domain signals.

In some embodiments, the n groups of bits are respectively modulated to generate the first signal. A time-domain resource of the first signal includes n time-domain units, and the n time-domain units are in one-to-one correspondence with the n groups of bits.

In some embodiments, a synchronization result and/or an AGC result of the first signal is used to assist the reception and/or detection of the second signal. Exemplarily, the synchronization result includes a time-domain synchronization result (or referred to as clock information) and/or a frequency-domain synchronization result (or referred to as a frequency offset estimation result).

In some embodiments, the time-domain synchronization result of the first signal is acquired based on an envelope-demodulation result of the first signal, and the reception and/or detection of the second signal is performed with reference to the time-domain synchronization result of the first signal. Exemplarily, based on the clock information acquired by performing envelope demodulation on the first signal, time-domain calibration is performed on the second signal, and the second signal is received and/or detected based on the calibrated time-domain resource.

In some embodiments, the frequency-domain synchronization result of the first signal is acquired based on a correlation detection result of the first signal, and the reception and/or detection of the second signal is performed with reference to the frequency-domain synchronization result of the first signal. Exemplarily, based on the clock information acquired by performing correlation detection on the first signal, frequency-domain calibration is performed on the second signal, and the second signal is received and/or detected based on the calibrated frequency-domain resource.

In some embodiments, the first signal is an auxiliary signal for the second signal; the first signal is a reference signal; the first signal is a measurement signal; or the first signal is a synchronization signal.

**In step 620,** the network device acquires the second signal based on m groups of bits.

In some embodiments, the m groups of bits are acquired by dividing wake-up information. In some embodiments, the wake-up information is specified by a communication protocol or generated by the network device. In some embodiments, the generation manner of the wake-up information is specified by the communication protocol or determined by the network device.

In some embodiments, the wake-up information is used to wake up a primary receiver of one low-power device, or primary receivers of a plurality of low-power devices.

In some embodiments, a bit length of the wake-up information is a length of one bit or a plurality of bits. That is, the wake-up information corresponds to one or more bit positions, or the wake-up information corresponds to one-bit information or multi-bit information. The embodiments of the present disclosure are described by an example where the bit length of the wake-up information is the length of a plurality of bits.

In some embodiments, each of the m groups of bits includes one or more bits. In some embodiments, bit groups include the same quantity of bits, or different bit groups include different quantities of bits.

In some embodiments, the m groups of bits are respectively subjected to the second transform to generate m groups of second frequency-domain signals, and the m groups of second frequency-domain signals are in one-to-one correspondence with the m groups of bits. In some embodiments, another frequency-domain signal and/or a GI is present between different first frequency-domain signals. Herein, the "another frequency-domain signal" refers to a frequency-domain signal other than the first frequency-domain signal and the second frequency-domain signal.

In some embodiments, the m groups of second frequency-domain signals are respectively subjected to the first transform to generate the second signal. A time-domain resource of the second signal includes m time-domain units, and the m time-domain units are in one-to-one correspondence with the m groups of second frequency-domain signals.

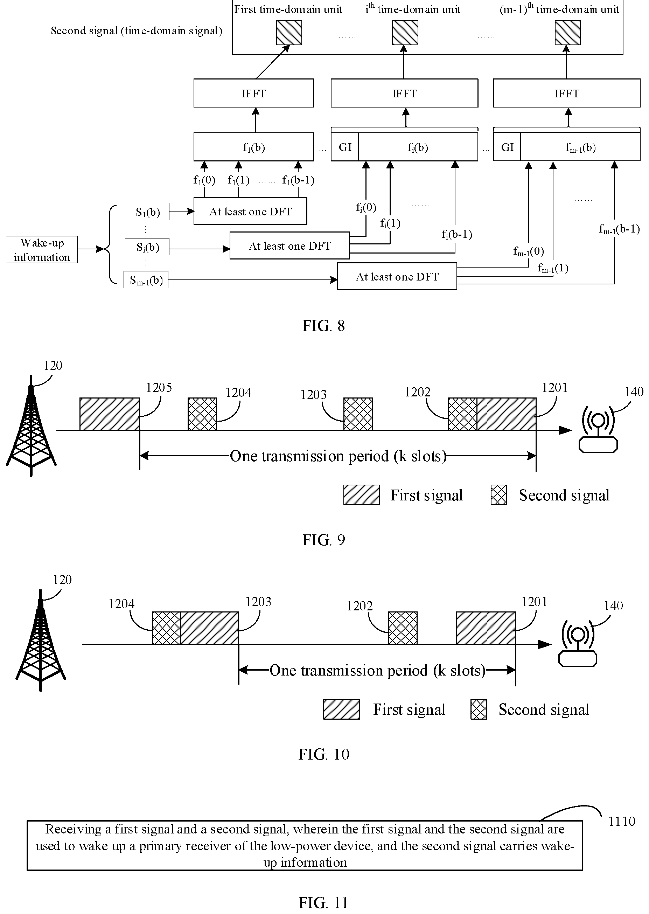

Exemplarily, as illustrated in FIG. 8, the wake-up information corresponds to m groups of bits, and each of the m groups of bits may be represented by Sᵢ(b), wherein i is equal to 0, 1... m-1. Exemplarily, a value of m is one of {1, 2, 4, 6, 8, 12, 16}, or m is another integer greater than 1.

In a case where the second transform is a DFT transform, an i^{th} second frequency-domain signal group fᵢ(b) is acquired by performing at least one DFT transform on an i^{th} bit group Sᵢ(b). A total of m groups of second frequency-domain signals are acquired by respectively subjecting the m groups of bits to at least one DFT transform.

In some embodiments, the quantities of bits included in different bit groups are the same or different. FIG. 8 is illustrated by an example where each bit group includes *b* bits.

In a case where the first transform is an IFFT transform, the i^{th} second frequency-domain signal group fᵢ(b) is subjected to the IFFT transform and mapped to an i^{th} time-domain unit. The m groups of second frequency-domain signals are respectively subjected to the IFFT transform and mapped to a total of m time-domain units. That is, the m time-domain units are in one-to-one correspondence with the m groups of second frequency-domain signals.

In some embodiments, the wake-up information corresponds to m time-domain units. The wake-up information is generated by performing modulation on m groups of bits respectively, and the m time-domain units are in one-to-one correspondence with the m groups of bits.

In some embodiments, prior to performing step 620, the network device further performs time-domain oversampling on the wake-up information. Exemplarily, original wake-up information, which corresponds to m/4 bits, is oversampled by a factor of 4 by repeating every four consecutive bits to form an information bit group of m bits.

In some embodiments, the second signal is a multiplexed signal. That is, the second signal includes other information in addition to the wake-up information, or the second signal has other functions in addition to waking up the primary receiver of the low-power device.

**In step 630,** the network device transmits the first signal and the second signal.

The first signal and the second signal are used to wake up the primary receiver of the low-power device, and the second signal carries the wake-up information.

In some embodiments, an association is present between the first signal and the second signal. The first signal and the second signal are used to wake up the primary receiver of the low-power device. This specifically means that the first signal and the associated second signal are jointly used to wake up the primary receiver of the low-power device. The second signal is mainly used to carry the wake-up information. Exemplarily, the first signal may be used to assist the reception and/or detection of the second signal.

In some embodiments, the first signal is periodically transmitted. A transmission period of the first signal may be fixed or variable. That is, durations of different transmission periods of the first signal may be the same or different. The transmission period of the first signal may be specifically configured by the network device, determined by the low-power device, or determined via negotiation by the network device and the low-power device, which is not limited in the present disclosure.

For the association between the first signal and the second signal, reference may be made to step 510, which is not elaborated herein.

In some embodiments, within one transmission period, the network device transmits one first signal and a plurality of second signals. The first signal from the network device is used to assist the reception and/or detection of the plurality of second signals.

In some embodiments, a time-domain interval between the plurality of second signals and the first signal is fixed, specified by a communication protocol, or configured by the network device.

In some embodiments, within one transmission period, a slot where the first signal is located is adjacent to or not adjacent to a slot where the second signal that is transmitted for the first time is located.

In some embodiments, within one transmission period, slots where the plurality of transmitted second signals are located are adjacent to or not adjacent to each other.

In some embodiments, within one transmission period, time-domain intervals between the plurality of transmitted second signals are the same.

Exemplarily, as illustrated in FIG. 9, a network device 120 transmits a first signal and a second signal to a low-power device 140. In a case where a time-domain unit is a slot, a transmission period of the first signal is k slots, that is, a time-domain interval between a first signal 1201 and a first signal 1205 is k slots. Within the transmission period, the network device 120 transmits three second signals, which are the same or different. That is, the three second signals may be intended for the same terminal or terminal group, or different terminals or terminal groups. A slot where the first signal 1201 is located is adjacent to a slot where a second signal 1202 is located. The slot where the second signal 1202 is located is not adjacent to a slot where a second signal 1203 is located. The slot where the second signal 1203 is located is not adjacent to a slot where a second signal 1204 is located. The first signal 1201 is associated with the second signal 1202, the second signal 1203, and the second signal 1204. That is, the first signal 1201 is used to assist the reception and/or detection of the second signal 1202, the second signal 1203, and the second signal 1204.

In some embodiments, within one transmission period, one first signal and one second signal are present. Accordingly, the first signal from the network device is used to assist the reception and/or detection of one second signal.

In some embodiments, a time-domain interval between the second signal and the first signal is fixed, specified by a communication protocol, or configured by the network device.

In some embodiments, the network device periodically transmits the first signal, and the transmission period of the first signal is k time-domain units. In addition, within the transmission period of the first signal, the network device transmits the second signal once. That is, within k time-domain units, the network device performs one transmission of the first signal and one transmission of the second signal. The first signal is associated with one second signal within k time-domain units. That is, the first signal is used to assist the reception and/or detection of one second signal within one transmission period.

In some embodiments, within one transmission period, a slot where the first signal is located is adjacent to or not adjacent to a slot where the second signal is located.

Exemplarily, as illustrated in FIG. 10, a network device 120 transmits a first signal and a second signal to a low-power device 140. In a case where a time-domain unit is a slot, a transmission period of the first signal is k slots, that is, a time-domain interval between a first signal 1201 and a first signal 1203 is k slots. Within one transmission period, the network device 120 transmits one second signal, wherein the second signals within different transmission periods are the same or different. That is, the second signals within different transmission periods may be intended for the same terminal or terminal group, or for different terminals or terminal groups. A slot where the first signal 1201 is located is not adjacent to a slot where a second signal 1202 is located. The first signal 1201 is associated with the second signal 1202. That is, the first signal 1201 is used to assist the reception and/or detection of the second signal 1202. A slot where the first signal 1203 is located is adjacent to a slot where a second signal 1204 is located. The first signal 1203 is associated with the second signal 1204. That is, the first signal 1203 is used to assist the reception and/or detection of the second signal 1204.

In some embodiments, different time-domain units included in a time-domain resource of the first signal are respectively associated with different frequency-domain positions. This may be understood as follows: the first signal corresponds to at least two time-domain units, and frequency-domain positions mapped by the at least two time-domain units are different. Such a design is conducive to improving the anti-interference capabilities of the first signal and the capabilities to resist frequency-selective fading (that is, anti-fading capabilities), such that the total transmission power and coverage performance of the first signal are improved.

In some embodiments, the first signal is a frequency-hopping signal, which supports further improvement of the communication quality of the first signal.

In some embodiments, different time-domain units included in a time-domain resource of the second signal are respectively associated with different frequency-domain positions. This may be understood as follows: the second signal corresponds to at least two time-domain units, and frequency-domain positions mapped by the at least two time-domain units are different. Such a design is conducive to improving the anti-interference capabilities of the second signal and the capabilities to resist frequency-selective fading (that is, anti-fading capabilities), such that the total transmission power and coverage performance of the second signal are improved.

In some embodiments, the second signal is a frequency-hopping signal, which supports further improvement of the communication quality of the second signal.

In some embodiments, the first signal is transmitted via unicast, multicast, or broadcast, and the second signal is transmitted via unicast, multicast, or broadcast.

In some embodiments, the wake-up information carried by the second signal is used to wake up one low-power device. Accordingly, the network device may transmit the second signal via unicast.

In some embodiments, the wake-up information carried by the second signal is used to wake up at least two low-power devices. Accordingly, the network device may transmit the second signal via multicast or broadcast.

In some embodiments, the at least two low-power devices are located in the same cell or different cells respectively.

In some embodiments, the second signal is a cell-level signal, which may be understood as follows: the wake-up information carried by the second signal is used to wake up one or more low-power devices in one cell.

In some embodiments, the network device transmits the first signal via unicast, multicast, or broadcast.

In some embodiments, the first signal carries indication information, which is used to indicate a second signal having a corresponding relationship with the first signal, a second signal associated with the first signal, or a second signal whose reception and/or detection is assisted by the first signal. This may also be understood as follows: the first signal carries identification information of a second signal, representing that the first signal is associated with the second signal indicated by the identification information, or the first signal is used to assist the reception and/or detection of the second signal indicated by the identification information.

For other details of the first signal and the second signal, reference may be made to step 510, which are not elaborated herein.

In view of the above, in the method according to the embodiments of the present disclosure, the network device wakes up the primary receiver of the low-power device by transmitting the first signal and the second signal. The first signal is provided in addition to the second signal carrying the wake-up information to wake up the primary receiver, such that the primary receiver acquires more information for wake-up, thereby effectively improving the demodulation performance and decoding performance of the second signal. In this way, the wake-up success rate and efficiency of the low-power device are significantly improved, and the transmission quality and reliability of the wake-up information are better ensured. In addition, a plurality of designs of the second signal within one transmission period of the first signal are provided, such that the method according to the embodiments of the present disclosure meets wake-up requirements in various communication scenarios. Repeatedly transmitting the second signal a plurality of times for the same terminal or terminal group within one transmission period helps to improve the reception success rate of the second signal, thereby improving the success rate of waking up the primary receiver. Alternatively, transmitting the wake-up information for a plurality of terminals or terminal groups within one transmission period improves the efficiency of transmitting the wake-up information, saves the quantities of transmitted signals and the time for waking up the target terminal, improves the overall efficiency of the communication system, and reduces the overall resource consumption of the communication system.

FIG. 11 is a schematic flowchart of a wake-up method according to some embodiments of the present disclosure. The method is performed by the low-power device as illustrated in FIG. 1 or FIG. 3, and the method includes the following step.

**In step 1110,** the low-power device receives a first signal and a second signal, wherein the first signal and the second signal are used to wake up a primary receiver of the low-power device, and the second signal carries wake-up information.

In some embodiments, the second signal carries wake-up information. In some embodiments, the wake-up information is implemented as indication information.

In some embodiments, the wake-up information carried by the second signal is used to wake up a primary receiver of one low-power device, or primary receivers of a plurality of low-power devices.

In some embodiments, the wake-up information carried by the second signal is used to instruct a secondary receiver of the low-power device to wake up the primary receiver, or to instruct a secondary receiver of the low-power device to activate the primary receiver.

In some embodiments, the first signal is associated with the second signal. Exemplarily, the reception of the second signal is associated with the first signal, and/or the detection of the second signal is associated with the first signal.

In view of the above, in the method according to the embodiments of the present disclosure, the primary receiver of the low-power device is woken up by receiving the first signal and the second signal. The first signal is provided in addition to the second signal carrying the wake-up information to wake up the primary receiver, such that the primary receiver acquires more information for wake-up, thereby significantly improving the wake-up success rate and efficiency of the low-power device.

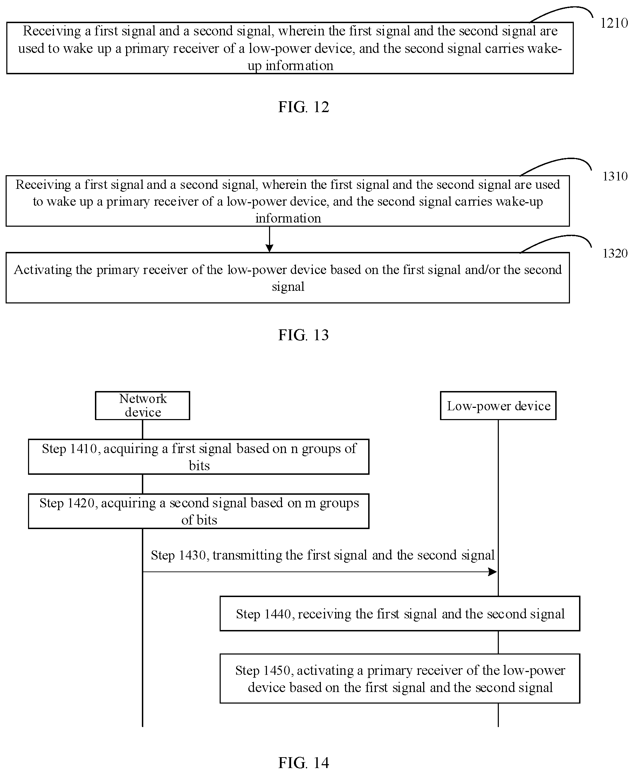

In some embodiments, step 1110 may also be implemented as step 1210, as illustrated in FIG. 12. FIG. 12 is a schematic flowchart of a wake-up method according to some embodiments of the present disclosure. The method is performed by the low-power device as illustrated in FIG. 1, FIG. 3, or FIG. 11, and the method includes the following step.

**In step 1210,** the low-power device receives a first signal and a second signal, wherein the first signal and the second signal are used to wake up a primary receiver of the low-power device, and the second signal carries wake-up information.

In some embodiments, an association is present between the first signal and the second signal. The first signal and the second signal are used to wake up the primary receiver of the low-power device. This specifically means that the first signal and the associated second signal are jointly used to wake up the primary receiver of the low-power device. The second signal is mainly used to carry the wake-up information. Exemplarily, the first signal may be used to assist the reception and/or detection of the second signal.

In some embodiments, the first signal is periodically transmitted. A transmission period of the first signal may be fixed or variable. That is, durations of different transmission periods of the first signal may be the same or different. The transmission period of the first signal may be specifically configured by the network device, determined by the low-power device, or determined via negotiation by the network device and the low-power device, which is not limited in the present disclosure.

In some embodiments, the association between the first signal and the second signal in the present disclosure may specifically be a relationship between the transmission period of the first signal and the second signal. For example, within each transmission period of the first signal, the network device may transmit one second signal or a plurality of second signals. In a case where the network device has no demand for waking up the low-power device within a particular transmission period, the network device may not transmit the second signal within this transmission period. The first signal within each transmission period is used to wake up the low-power device together with the second signal within the transmission period.

In some embodiments, durations of different transmission periods of the first signal are the same or different.

In some embodiments, within each transmission period of the first signal, the network device transmits one second signal. This allows a more appropriate and targeted first signal to be provided for each second signal, improves the association accuracy between the first signal and the second signal, and helps to improve the transmission quality of the wake-up information carried by each second signal in a targeted manner.

In some embodiments, within each transmission period of the first signal, the network device transmits a plurality of second signals. This saves the quantity of transmissions of the first signal, improves the association efficiency of the first signal, saves the time for waking up the target terminal, and supports ensuring the demodulation performance and decoding performance for more second signals in a case where the first signal consumes fewer transmission resources, thereby improving the wake-up efficiency.

In some embodiments, in a case where the network device transmits a plurality of second signals within a particular transmission period, the plurality of second signals may be used to wake up the same terminal or terminal group. By repeating the transmission of the second signal a plurality of times for the same terminal or terminal group within one transmission period, the reception success rate of the second signal may be improved, thereby improving the success rate of waking up the primary receiver.

In other embodiments, in a case where the network device transmits a plurality of second signals within a particular transmission period, the plurality of second signals may be used to wake up different terminals or terminal groups. A terminal that receives the second signals may determine whether any of the plurality of second signals is intended for the terminal based on one or more of a terminal ID, a terminal group ID, a terminal group index, or the like carried by each second signal. Alternatively, a terminal that receives the second signals may determine whether any of the plurality of second signals is intended for the terminal based on one or more of a terminal ID, a terminal group ID, a terminal group index, a second signal index, a second signal ID, or the like carried by the first signal associated with the second signals. By transmitting the wake-up information for the plurality of terminals or terminal groups within one transmission period, the efficiency of the transmission of the wake-up information may be improved, and the quantity of transmitted signals and the time for waking up the target terminal may be saved.

In some embodiments, a plurality of first signals are present within a transmission period, wherein each of the plurality of first signals is associated with a portion of second signals within the transmission period, and the second signals associated with different first signals are different or overlapping.

In some embodiments, a time-domain resource of the first signal includes n time-domain units, wherein n is an integer greater than or equal to 1.

The time-domain unit includes at least one of a frame, a subframe, a slot, a mini-slot, a sub-slot, a symbol, a symbol group, or an element based on another time-domain unit.

The symbol includes at least one of an OFDM symbol, a QPSK symbol, an ASK symbol, an FSK symbol, an OOK symbol, or an MC-OOK symbol.

In some embodiments, the first signal is generated by performing a first transform on n groups of first frequency-domain signals respectively. The n time-domain units are in one-to-one correspondence with the n groups of first frequency-domain signals. The first transform refers to a transform of the signal from a frequency domain to a time domain.

In some embodiments, the first transform includes one of an IFT, an IFFT, an inverse Laplace transform, an inverse z-transform, another transform equivalent to the IFT, another transform equivalent to the IFFT, another transform equivalent to the inverse Laplace transform, or another transform equivalent to the inverse z-transform. Herein, "equivalent" means that two transform methods achieve the same effect, two transform methods have the same principle, or two transform methods have the same calculation process.

In some embodiments, the n groups of first frequency-domain signals are generated by performing a second transform on n groups of bits respectively. The second transform refers to a transform of the signal from the time domain to the frequency domain. A group of bits in the n groups of bits includes one or more bits.

In some embodiments, the second transform includes one of an FT, an FFT, a DFT, a Laplace transform, a z-transform, another transform equivalent to the FT, another transform equivalent to the FFT, another transform equivalent to the Laplace transform, or another transform equivalent to the z-transform. Herein, "equivalent" means that two transform methods achieve the same effect, two transform methods have the same principle, or two transform methods have the same calculation process.

In some embodiments, the first signal is generated by performing modulation on n groups of bits respectively. The n time-domain units are in one-to-one correspondence with the n groups of bits.

In some embodiments, the first signal is periodically or aperiodically transmitted.

In some embodiments, the second signal carries the wake-up information. In some embodiments, the wake-up information is implemented as indication information.

In some embodiments, the wake-up information carried by the second signal is used to wake up a primary receiver of one low-power device, or primary receivers of a plurality of low-power devices.

In some embodiments, the wake-up information carried by the second signal is used to instruct a secondary receiver of the low-power device to wake up the primary receiver, or to instruct a secondary receiver of the low-power device to activate the primary receiver.

In some embodiments, a time-domain resource of the second signal includes m time-domain units, wherein m is an integer greater than or equal to 1, and m is equal to or different from n.

In some embodiments, the second signal is generated by performing the first transform on m groups of second frequency-domain signals respectively, wherein the m time-domain units are in one-to-one correspondence with the m groups of second frequency-domain signals. The first transform refers to a transform of the signal from the frequency domain to the time domain.

In some embodiments, the m groups of second frequency-domain signals are generated by performing the second transform on m groups of bits respectively. A group of bits in the m groups of bits includes one or more bits. The second transform refers to a transform of the signal from the time domain to the frequency domain.

In some embodiments, the second signal is generated by performing modulation on m groups of bits respectively, wherein the m time-domain units are in one-to-one correspondence with the m groups of bits. A group of bits in the m groups of bits includes one or more bits.

In some embodiments, the n time-domain units are different from the m time-domain units. That is, the time-domain resource of the first signal is different from the time-domain resource of the second signal. In some embodiments, the n time-domain units and the m time-domain units differ in at least one of the following aspects: quantities are different (i.e., n is not equal to m); a start position of the n time-domain units and a start position of the m time-domain units are different; or an end position of the n time-domain units and an end position of the m time-domain units are different.

In some embodiments, a frequency-domain resource of the first signal is different from a frequency-domain resource of the second signal. The frequency-domain resource of the first signal is referred to as a first frequency-domain resource, and the frequency-domain resource of the second signal is referred to as a second frequency-domain resource.

In some embodiments, the first frequency-domain resource and the second frequency-domain resource differ in at least one of the following aspects: a quantity of frequency-domain units included in the first frequency-domain resource and a quantity of frequency-domain units included in the second frequency-domain resource are different (a width of the first frequency-domain resource and a width of the second frequency-domain resource are different); a frequency-domain start position of the first frequency-domain resource and a frequency-domain start position of the second frequency-domain resource are different; or a frequency-domain end position of the first frequency-domain resource and a frequency-domain end position of the second frequency-domain resource are different.

In some embodiments, a center frequency point of the first frequency-domain resource is aligned with a center frequency point of the second frequency-domain resource; an upper frequency point of the first frequency-domain resource is aligned with an upper frequency point of the second frequency-domain resource; or a lower frequency point of the first frequency-domain resource is aligned with a lower frequency point of the second frequency-domain resource. Such a design simplifies the demodulation and decoding of the second signal.

The frequency-domain unit includes at least one of a carrier, a BWP, a sub-band, a sub-channel, a PRB, a subcarrier, or an element based on another frequency-domain unit.

In some embodiments, a synchronization result and/or an AGC result of the first signal is used to assist the reception and/or detection of the second signal. Exemplarily, the synchronization result includes a time-domain synchronization result (or referred to as clock information) and/or a frequency-domain synchronization result (or referred to as a frequency offset estimation result).

In some embodiments, the time-domain synchronization result of the first signal is acquired based on an envelope-demodulation result of the first signal, and the reception and/or detection of the second signal is performed with reference to the time-domain synchronization result of the first signal. Exemplarily, based on the clock information acquired by performing envelope demodulation on the first signal, time-domain calibration is performed on the second signal, and the second signal is received and/or detected based on the calibrated time-domain resource.

In some embodiments, the frequency-domain synchronization result of the first signal is acquired based on a correlation detection result of the first signal, and the reception and/or detection of the second signal is performed with reference to the frequency-domain synchronization result of the first signal. Exemplarily, based on the clock information acquired by performing correlation detection on the first signal, frequency-domain calibration is performed on the second signal, and the second signal is received and/or detected based on the calibrated frequency-domain resource.

In some embodiments, the first signal is an auxiliary signal for the second signal; the first signal is a reference signal; the first signal is a measurement signal; or the first signal is a synchronization signal.

In some embodiments, a correspondence between the first signals and the second signals satisfies one of:
- the first signals being in one-to-one correspondence with the second signals, which may be understood as follows: one first signal is used to assist the reception and/or detection of one second signal;
- the first signals being in one-to-many correspondence with the second signals, which may be understood as follows: one first signal is used to assist the reception and/or detection of a plurality of second signals;
- the first signals being in one-to-one correspondence with the second signals within a period, which may be understand as follows: one first signal is used to assist the reception and/or detection of one second signal within the transmission period of the first signal; or
- the first signals being in one-to-many correspondence with the second signals within a period, which may be understood as follows: one first signal is used to assist the reception and/or detection of a plurality of second signals within the transmission period of the first signal.

Herein, "a period" refers to the transmission period of the first signal.

In view of the above, in the method according to the embodiments of the present disclosure, the primary receiver of the low-power device is woken up by receiving the first signal and the second signal. The first signal is provided in addition to the second signal carrying the wake-up information to wake up the primary receiver, such that the primary receiver acquires more information for wake-up, thereby effectively improving the demodulation performance and decoding performance of the second signal. In this way, the wake-up success rate and efficiency of the low-power device are significantly improved, and the transmission quality and reliability of the wake-up information are better ensured. In addition, a plurality of designs of the second signal within one transmission period of the first signal are provided, such that the method according to the embodiments of the present disclosure meets wake-up requirements in various communication scenarios. Repeatedly transmitting the second signal a plurality of times for the same terminal or terminal group within one transmission period helps to improve the reception success rate of the second signal, thereby improving the success rate of waking up the primary receiver. Alternatively, transmitting the wake-up information for a plurality of terminals or terminal groups within one transmission period improves the efficiency of transmitting the wake-up information, saves the quantities of transmitted signals and the time for waking up the target terminal, improves the overall efficiency of the communication system, and reduces the overall resource consumption of the communication system.

In some embodiments, step 1210 may be implemented as step 1310. In addition to step 1310, the wake-up method may further include step 1320, as illustrated in FIG. 13. FIG. 13 is a schematic flowchart of a wake-up method according to some embodiments of the present disclosure. The method is performed by the low-power device as illustrated in FIG. 1, FIG. 3, FIG. 11, or FIG. 12, and the method includes the following steps.

**In step 1310,** the low-power device receives a first signal and a second signal, wherein the first signal and the second signal are used to wake up a primary receiver of the low-power device, and the second signal carries wake-up information.

For details, reference may be made to step 1210, which are not elaborated herein.

**In step 1320,** the low-power device activates the primary receiver of the low-power device based on the first signal and/or the second signal.

In some embodiments, the primary receiver of the low-power device is activated based on at least one of the wake-up information carried by the second signal, signal quality of the first signal, or signal quality of the second signal.

In some embodiments, the primary receiver of the low-power device is activated based on the wake-up information carried by the second signal.

In some embodiments, the primary receiver of the low-power device is activated based on the signal quality of the first signal and/or the signal quality of the second signal. By directly activating the primary receiver based on the signal quality rather than relying on the interpretation of the wake-up information in the second signal, this design enhances the wake-up efficiency and flexibility. Moreover, this design is particularly suitable for scenarios with poor signal quality or unfavorable communication environments, effectively reducing the wake-up failure rate of the first and second signals while improving the effectiveness of the first and second signals. Furthermore, this design prevents situations where the first and second signals consume transmission resources but fail to wake up the primary receiver due to incorrect interpretation of the wake-up information carried by the second signal, thereby reducing wastage of transmission resources.

In some embodiments, the low-power device performs signal processing on the first signal to acquire a result of the signal processing on the first signal. Exemplarily, the signal processing includes at least one of time-domain synchronization, frequency-domain synchronization, or AGC. The time-domain synchronization is also referred to as timing synchronization. The frequency-domain synchronization is also referred to as frequency offset estimation. The result of the signal processing includes, for example, at least one of a time-domain synchronization result (or clock information), a frequency-domain synchronization result (or a frequency offset estimation result), or an AGC result.

In some embodiments, the synchronization result and/or the AGC result of the first signal are used to assist the reception and/or detection of the second signal. Exemplarily, the synchronization result includes the time-domain synchronization result (or referred to as the clock information) and/or the frequency-domain synchronization result (or referred to as the frequency offset estimation result).

In some embodiments, the time-domain synchronization result of the first signal is acquired based on an envelope-demodulation result of the first signal, and the reception and/or detection of the second signal is performed with reference to the time-domain synchronization result of the first signal. Exemplarily, based on the clock information obtained by performing envelope detection on the first signal, time-domain calibration is performed on the second signal, and the second signal is received and/or detected based on the calibrated time-domain resource.

In some embodiments, the frequency-domain synchronization result of the first signal is obtained based on a correlation detection result of the first signal, and the reception and/or detection of the second signal is performed with reference to the frequency-domain synchronization result of the first signal. Exemplarily, based on the clock information acquired by performing correlation detection on the first signal, frequency-domain calibration is performed on the second signal, and the second signal is received and/or detected based on the calibrated frequency-domain resource.

In some embodiments, the first signal is an auxiliary signal for the second signal; the first signal is a reference signal; the first signal is a measurement signal; or the first signal is a synchronization signal.

In some embodiments, the low-power device decodes and demodulates the second signal to acquire the wake-up information.

In some embodiments, the low-power device measures the first signal to acquire the signal quality of the first signal.

In some embodiments, the low-power device measures the second signal to acquire the signal quality of the second signal.

In some embodiments, the signal quality may be represented by at least one: a value of reference signal received power (RSRP), a value of a reference signal strength indicator (RSSI), a value of reference signal received quality (RSRQ), a value of signal-to-interference-plus-noise ratio (SINR), a value of cross-link interference (CLI), a value of channel state information (CSI), or the like.

In some embodiments, in a case where the wake-up information instructs the low-power device to receive data and/or signals other than the first signal, the primary receiver is activated. The data and/or the other signals are received using the primary receiver.

In some embodiments, in a case where the wake-up information instructs the low-power device to transmit data and/or signals, the primary transmitter and/or a backscatter transmitter is activated. The data and/or the signals are transmitted using the primary transmitter and/or the backscatter transmitter.

In some embodiments, in a case where the signal quality of the first signal is lower than a first threshold, the low-power device activates the primary receiver and receives data and/or signals using the primary receive.

In some embodiments, in a case where the signal quality of the first signal is lower than a first threshold, the low-power device activates the primary transmitter and/or a backscatter transmitter and transmits data and/or signals using the primary transmitter and/or the backscatter transmitter.

In some embodiments, in a case where the signal quality of the second signal is lower than a second threshold, the low-power device activates the primary receiver and receives data and/or signals using the primary receiver.

In some embodiments, in a case where the signal quality of the second signal is lower than a second threshold, the low-power device activates the primary transmitter and/or a backscatter transmitter and transmits data and/or signals using the primary transmitter and/or the backscatter transmitter.

The first threshold is specified by a communication protocol, configured by the network device, or determined by the low-power device. The second threshold is specified by a communication protocol, configured by the network device, or determined by the low-power device. The first threshold is the same as or different from the second threshold.

In some embodiments, the primary receiver receives data and/or other signals on time-frequency resources indicated by the wake-up information. The primary transmitter receives data and/or other signals on time-frequency resources indicated by the wake-up information. The backscatter transmitter transmits data and/or signals on time-frequency resources indicated by the wake-up information.

In view of the above, in the method according to the embodiments of the present disclosure, the primary receiver of the low-power device is woken up by transmitting the first signal and the second signal. The first signal is provided in addition to the original second signal carrying the wake-up information to wake up the primary receiver, such that the primary receiver acquires more information for wake-up, thereby effectively improving the demodulation performance and decoding performance of the second signal. In this way, the wake-up success rate and efficiency of the low-power device are significantly improved, and the transmission quality and reliability of the wake-up information are better ensured. In addition, a plurality of designs of the second signal within one transmission period of the first signal are provided, such that the method according to the embodiments of the present disclosure meets wake-up requirements in various communication scenarios. Repeatedly transmitting the second signal a plurality of times for the same terminal or terminal group within one transmission period helps to improve the reception success rate of the second signal, thereby improving the success rate of waking up the primary receiver. Alternatively, transmitting the wake-up information for a plurality of terminals or terminal groups within one transmission period improves the efficiency of transmitting the wake-up information, saves the quantities of transmitted signals and the time for waking up the target terminal, improves the overall efficiency of the communication system, and reduces the overall resource consumption of the communication system. Furthermore, the primary receiver is woken up based on at least one of the wake-up information carried by the second signal, the signal quality of the first signal, or the signal quality of the second signal, such that the wake-up requirements in various communication scenarios are satisfied. Therefore, this method not only supports waking up the primary receiver based on the wake-up information carried by the second signal, but also supports directly activating the primary receiver based on the signal quality. Regardless of the signal quality, this method meets the wake-up requirements, ensuring the wake-up efficiency and effectiveness of the first and second signals, and improving the robustness of the wake-up method.

FIG. 14 is a schematic flowchart of a wake-up method according to some embodiments of the present disclosure. The method is performed by the network device as illustrated in FIG. 1, FIG. 2, FIG. 3, FIG. 4, FIG. 5, or FIG. 6, and the low-power device as illustrated in FIG. 1, FIG. 3, FIG. 11, FIG. 12, or FIG. 13. The method includes the following steps.

**In step 1410,** the network device acquires a first signal based on n groups of bits.

For details, reference may be made to step 610, which are not elaborated herein.

**In step 1420,** the network device acquires a second signal based on m groups of bits.

For details, reference may be made to step 620, which are not elaborated herein.

**In step 1430,** the network device transmits the first signal and the second signal.

For details, reference may be made to step 630, which are not elaborated herein.

**In step 1440,** the low-power device receives the first signal and the second signal.

For details, reference may be made to step 1210, which are not elaborated herein.

**In step 1450,** the low-power device activates a primary receiver of the low-power device based on the first signal and the second signal.

For details, reference may be made to step 1320, which are not elaborated herein.

It should be understood that steps 1410, 1420, and 1450 are optional. Each of the above steps may be used separately or the above steps may be used in combination. For example, steps 1410 and 1420 are combined to implement a signal modulation method; or step 1430 is used alone to implement a signal transmission method; or step 1440 is used alone to implement a signal receiving method; or steps 1440 and 1450 are combined to implement a signal processing method. Each of the above steps may be split. For example, step 1430 is split into a step of transmitting the first signal and a step of transmitting the second signal. The execution order of the above steps may be adjusted according to actual conditions. For example, step 1420 is performed prior to step 1410.

In view of the above, in the method according to the embodiments of the present disclosure, the primary receiver of the low-power device is woken up via the first signal and the second signal. The first signal is provided in addition to the second signal carrying the wake-up information to wake up the primary receiver, such that the primary receiver acquires more information for wake-up, thereby effectively improving the demodulation performance and decoding performance of the second signal. In this way, the wake-up success rate and efficiency of the low-power device are significantly improved, and the transmission quality and reliability of the wake-up information are better ensured. In addition, a plurality of designs of the second signal within one transmission period of the first signal are provided, such that the method according to the embodiments of the present disclosure meets wake-up requirements in various communication scenarios. Repeatedly transmitting the second signal a plurality of times for the same terminal or terminal group within one transmission period helps to improve the reception success rate of the second signal, thereby improving the success rate of waking up the primary receiver. Alternatively, transmitting the wake-up information for a plurality of terminals or terminal groups within one transmission period improves the efficiency of transmitting the wake-up information, saves the quantities of transmitted signals and the time for waking up the target terminal, improves the overall efficiency of the communication system, and reduces the overall resource consumption of the communication system.

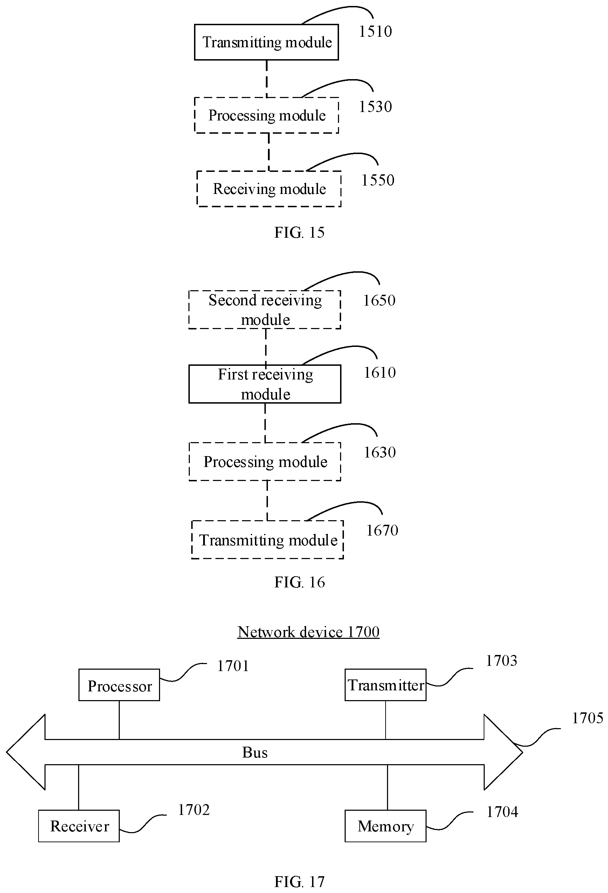

FIG. 15 is a structural block diagram of a wake-up apparatus according to some embodiments of the present disclosure. The apparatus may be implemented as the network device as illustrated in FIG. 1, FIG. 2, FIG. 3, FIG. 4, FIG. 5, or FIG. 6, or as a part of the network device as illustrated in FIG. 1, FIG. 2, FIG. 3, FIG. 4, FIG. 5, or FIG. 6. The apparatus includes a transmitting module 1510. In some embodiments, the apparatus further includes a processing module 1530 and/or a receiving module 1550.

The transmitting module 1510 is configured to transmit a first signal and a second signal, wherein the first signal and the second signal are used to wake up a primary receiver of a low-power device, and the second signal carries wake-up information.

In some embodiments, the first signal is periodically or aperiodically transmitted.

In some embodiments, at least one first signal is present within a transmission period, or at least one first signal and at least one second signal are present within a transmission period. The quantities of time-domain units corresponding to different transmission periods in a time domain are the same. That is, each transmission period has the same length in the time domain.

In some embodiments, the quantities of second signals within different transmission periods are the same or different.

In some embodiments, one first signal is present within a transmission period, wherein the first signal is associated with all second signals within the transmission period. This may be understood as follows: the reception and/or detection of all second signals within the transmission period are associated with the first signal within the transmission period, or alternatively, the reception and/or detection of all second signals within the transmission period are performed based on the first signal within the transmission period.

In some embodiments, a plurality of first signals are present within a transmission period, wherein each of the plurality of first signals is associated with a portion of second signals within the transmission period, and the second signals associated with different first signals are different or overlapping.

In some embodiments, a correspondence between the first signals and the second signals satisfies one of: the first signals being in one-to-one correspondence with the second signals; the first signals being in one-to-many correspondence with the second signals; the first signals being in one-to-one correspondence with the second signals within a period; or the first signals being in one-to-many correspondence with the second signals within a period. Herein, "a period" refers to the transmission period of the first signal.

In some embodiments, the first signal corresponds to n time-domain units, and the second signal corresponds to m time-domain units; wherein n is equal to or different from m, n is an integer greater than or equal to 1, and m is an integer greater than or equal to 1.

In some embodiments, the first signal is generated by performing a first transform on n groups of first frequency-domain signals respectively, wherein the n groups of first frequency-domain signals are in one-to-one correspondence with the n time-domain units; and the second signal is generated by performing the first transform on m groups of second frequency-domain signals respectively, wherein the m groups of second frequency-domain signals are in one-to-one correspondence with the m time-domain units; wherein the first transform is a transform of a signal from a frequency domain to a time domain.

In some embodiments, the first transform includes one of an IFT, an IFFT, an inverse Laplace transform, or an inverse z-transform.

In some embodiments, the n groups of first frequency-domain signals are generated by performing a second transform on n groups of bits respectively; and the m groups of second frequency-domain signals are generated by performing the second transform on m groups of bits respectively; wherein a group of bits in the n or m groups of bits includes one or more bits, and the second transform is a transform of a signal from the time domain to the frequency domain.

In some embodiments, the second transform includes one of: an FT, an FFT, a DFT, a Laplace transform, or a z-transform.

In some embodiments, the first signal is generated by performing modulation on n groups of bits respectively, wherein the n groups of bits are in one-to-one correspondence with the n time-domain units; and the second signal is generated by performing modulation on m groups of bits respectively, wherein the m groups of bits are in one-to-one correspondence with the m time-domain units, and a group of bits in the n or m groups of bits includes one or more bits.

In some embodiments, the n time-domain units are different from the m time-domain units. That is, a time-domain resource of the first signal is different from a time-domain resource of the second signal. In some embodiments, the n time-domain units and the m time-domain units differ in at least one of the following aspects: quantities are different (i.e., n is not equal to m); a start position of the n time-domain units and a start position of the m time-domain units are different; or an end position of the n time-domain units and an end position of the m time-domain units are different.

In some embodiments, a frequency-domain resource of the first signal is different from a frequency-domain resource of the second signal. The frequency-domain resource of the first signal is referred to as a first frequency-domain resource, and the frequency-domain resource of the second signal is referred to as a second frequency-domain resource.

In some embodiments, the first frequency-domain resource and the second frequency-domain resource differ in at least one of the following aspects: a quantity of frequency-domain units included in the first frequency-domain resource and a quantity of frequency-domain units included in the second frequency-domain resource are different (a width of the first frequency-domain resource and a width of the second frequency-domain resource are different); a frequency-domain start position of the first frequency-domain resource and a frequency-domain start position of the second frequency-domain resource are different; or a frequency-domain end position of the first frequency-domain resource and a frequency-domain end position of the second frequency-domain resource are different.

In some embodiments, a center frequency point of the first frequency-domain resource is aligned with a center frequency point of the second frequency-domain resource. Such a design simplifies the demodulation and decoding of the second signal.

In some embodiments, the apparatus further includes the processing module 1530 configured to generate/modulate the first signal.

In some embodiments, the processing module 1530 is configured to generate/modulate the second signal.

In some embodiments, the apparatus further includes the receiving module 1550 configured to receive signals or data from the low-power device. In an example, the receiving module 1550 is configured to receive a synchronization request from the low-power device. In another example, the receiving module 1550 is configured to receive a backscatter signal from the low-power device. In yet another example, the receiving module 1550 is configured to receive signals or data from a primary transmitter of the low-power device.

In view of the above, the apparatus according to the embodiments of the present disclosure wakes up the primary receiver of the low-power device by transmitting the first signal and the second signal. The first signal is provided in addition to the second signal carrying the wake-up information to wake up the primary receiver, such that the primary receiver acquires more information for wake-up, thereby effectively improving the demodulation performance and decoding performance of the second signal. In this way, the wake-up success rate and efficiency of the low-power device are significantly improved, and the transmission quality and reliability of the wake-up information are better ensured. In addition, a plurality of designs of the second signal within one transmission period of the first signal are provided, such that the method according to the embodiments of the present disclosure meets wake-up requirements in various communication scenarios. Repeatedly transmitting the second signal a plurality of times for the same terminal or terminal group within one transmission period helps to improve the reception success rate of the second signal, thereby improving the success rate of waking up the primary receiver. Alternatively, transmitting the wake-up information for a plurality of terminals or terminal groups within one transmission period improves the efficiency of transmitting the wake-up information, saves the quantities of transmitted signals and the time for waking up the target terminal, improves the overall efficiency of the communication system, and reduces the overall resource consumption of the communication system.

FIG. 16 is a block diagram of a wake-up apparatus according to some embodiments of the present disclosure. The apparatus may be implemented as the low-power device as illustrated in FIG. 1, FIG. 3, FIG. 11, FIG. 12, or FIG. 13, or as a part of the low-power device as illustrated in FIG. 1, FIG. 3, FIG. 11, FIG. 12, or FIG. 13. The apparatus includes a first receiving module 1610. In some embodiments, the apparatus further includes at least some of a processing module 1630, a second receiving module 1650, or a transmitting module 1670.

The first receiving module 1610 is configured to receive a first signal and a second signal, wherein the first signal and the second signal are used to wake up a primary receiver of the low-power device, and the second signal carries wake-up information.

In some embodiments, the first signal is periodically or aperiodically transmitted.

In some embodiments, at least one first signal is present within a transmission period, or at least one first signal and at least one second signal are present within a transmission period. The quantities of time-domain units corresponding to different transmission periods in a time domain are the same. That is, each transmission period has the same length in the time domain.

In some embodiments, the quantities of second signals within different transmission periods are the same or different.

In some embodiments, one first signal is present within a transmission period, wherein the first signal is associated with all second signals within the transmission period. This may be understood as follows: the reception and/or detection of all second signals within the transmission period are associated with the first signal within the transmission period, or alternatively, the reception and/or detection of all second signals within the transmission period are performed based on the first signal within the transmission period.

In some embodiments, a plurality of first signals are present within a transmission period, wherein each first signal of the plurality of first signals is associated with a portion of second signals within the transmission period, and the second signals associated with different first signals are different or overlapping.

In some embodiments, a correspondence between the first signals and the second signals satisfies one of: the first signals being in one-to-one correspondence with the second signals; the first signals being in one-to-many correspondence with the second signals; the first signals being in one-to-one correspondence with the second signals within a period; or the first signals being in one-to-many correspondence with the second signals within a period. Herein, "a period" refers to the transmission period of the first signal.

In some embodiments, the first signal corresponds to n time-domain units, and the second signal corresponds to m time-domain units; wherein n is equal to or different from m, n is an integer greater than or equal to 1, and m is an integer greater than or equal to 1.

In some embodiments, the first signal is generated by performing a first transform on n groups of first frequency-domain signals respectively, wherein the n groups of first frequency-domain signals are in one-to-one correspondence with the n time-domain units; and the second signal is generated by performing the first transform on m groups of second frequency-domain signals respectively, wherein the m groups of second frequency-domain signals are in one-to-one correspondence with the m time-domain units; wherein the first transform is a transform of a signal from a frequency domain to a time domain.

In some embodiments, the first transform includes one of an IFT, an IFFT, an inverse Laplace transform, or an inverse z-transform.

In some embodiments, the n groups of first frequency-domain signals are generated by performing a second transform on n groups of bits respectively; and the m groups of second frequency-domain signals are generated by performing the second transform on m groups of bits respectively; wherein a group of bits in the n or m groups of bits includes one or more bits, and the second transform is a transform of a signal from the time domain to the frequency domain.

In some embodiments, the second transform includes one of an FT, an FFT, a DFT, a Laplace transform, or a z-transform.

In some embodiments, the first signal is generated by performing modulation on n groups of bits respectively, wherein the n groups of bits are in one-to-one correspondence with the n time-domain units; and the second signal is generated by performing modulation on m groups of bits respectively, wherein the m groups of bits are in one-to-one correspondence with the m time-domain units, and a group of bits in the n or m groups of bits includes one or more bits.

In some embodiments, the n time-domain units are different from the m time-domain units.

In some embodiments, the first signal corresponds to a first frequency-domain resource, and the second signal corresponds to a second frequency-domain resource; wherein a relationship between the first frequency-domain resource and the second frequency-domain resource satisfies at least one of: a bandwidth of the first frequency-domain resource being different from a bandwidth of the second frequency-domain resource; a center frequency point of the first frequency-domain resource being aligned with a center frequency point of the second frequency-domain resource; a frequency-domain start position of the first frequency-domain resource being different from a frequency-domain start position of the second frequency-domain resource; or a frequency-domain end position of the first frequency-domain resource being different from a frequency-domain end position of the second frequency-domain resource.

In some embodiments, the apparatus further includes the processing module 1630 configured to perform signal processing based on the first signal. The first receiving module 1610 is further configured to receive the second signal based on a result of the signal processing. The signal processing includes at least one of time-domain synchronization, frequency-domain synchronization, or AGC.

In some embodiments, the apparatus further includes the second receiving module 1650.

In some embodiments, the processing module 1630 is configured to activate the second receiving module 1650 based on the first signal and/or the second signal.

In some embodiments, the processing module 1630 is configured to activate the second receiving module 1650 based on the wake-up information, and/or signal quality of the first signal, and/or signal quality of the second signal.

In some embodiments, the processing module 1630 is further configured to: detect the second signal to acquire the wake-up information; and/or measure the second signal to acquire the signal quality of the second signal; and/or measure the first signal to acquire the signal quality of the first signal.

In some embodiments, the wake-up information includes time-domain resource information and/or frequency-domain resource information.

In some embodiments, the second receiving module 1650 is configured to receive data and/or a signal.

In some embodiments, the apparatus further includes the transmitting module 1670 configured to transmit data and/or a signal.

In some embodiments, the transmitting module 1670 is configured for backscattering.

In view of the above, the apparatus according to the embodiments of the present disclosure receives the first signal and the second signal to wake up the primary receiver of the low-power device. The first signal is provided in addition to the second signal carrying the wake-up information to wake up the primary receiver, such that the primary receiver acquires more information for wake-up, thereby effectively improving the demodulation performance and decoding performance of the second signal. In this way, the wake-up success rate and efficiency of the low-power device are significantly improved, and the transmission quality and reliability of the wake-up information are better ensured. In addition, a plurality of designs of the second signal within one transmission period of the first signal are provided, such that the method according to the embodiments of the present disclosure meets wake-up requirements in various communication scenarios. Repeatedly transmitting the second signal a plurality of times for the same terminal or terminal group within one transmission period helps to improve the reception success rate of the second signal, thereby improving the success rate of waking up the primary receiver. Alternatively, transmitting the wake-up information for a plurality of terminals or terminal groups within one transmission period improves the efficiency of transmitting the wake-up information, saves the quantities of transmitted signals and the time for waking up the target terminal, improves the overall efficiency of the communication system, and reduces the overall resource consumption of the communication system.

FIG. 17 is a schematic structural diagram of a network device 1700 according to some embodiments of the present disclosure. The network device 1700 includes a processor 1701, a receiver 1702, a transmitter 1703, a memory 1704, and a bus 1705. The network device 1700 may be configured to perform some or all of the steps illustrated in FIGS. 4 to 6.

The processor 1701 includes one or more processing cores, and the processor 1701 executes various functional applications and performs information processing by running software programs and modules.

The receiver 1702 and the transmitter 1703 may be implemented as a communication assembly, which may be a communication chip. The communication assembly may be referred to as a transceiver. In some embodiments, the receiver 1702 may be configured to implement the functions and steps of the receiving module 1550, and the transmitter 1703 may be configured to implement the functions and steps of the transmitting module 1510.

The memory 1704 is communicably connected to the processor 1701 via the bus 1705.

The memory 1704 is configured to store at least one instruction, and the processor 1701 is configured to execute the at least one instruction to perform the steps in the above method embodiments. The processor 1701 may be configured to implement the functions and steps of the processing module 1530.

In addition, the memory 1704 may be implemented by any type of a volatile or non-volatile storage device or a combination thereof. The volatile or non-volatile storage device includes, but not limited to: a magnetic or optical disk, an electrically-erasable programmable read-only memory (EEPROM), an erasable programmable read-only memory (EPROM), a static random-access memory (SRAM), a read-only memory (ROM), a magnetic memory, a flash memory, and a programmable read-only memory (PROM).

In some embodiments, the receiver 1702 independently receives signals/data, the processor 1701 controls the receiver 1702 to receive signals/data, the processor 1701 requests the receiver 1702 to receive signals/data, or the processor 1701 cooperates with the receiver 1702 to receive signals/data.

In some embodiments, the transmitter 1703 independently transmits signals/data, the processor 1701 controls the transmitter 1703 to transmit signals/data, the processor 1701 requests the transmitter 1703 to transmit signals/data, or the processor 1701 cooperates with the transmitter 1703 to transmit signals/data.

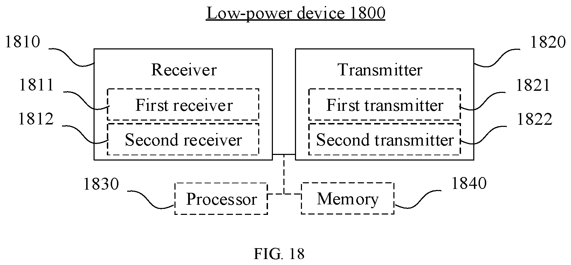

FIG. 18 is a structural schematic diagram of a low-power device 1800 according to some embodiments of the present disclosure. The low-power device 1800 includes a receiver 1810 and a transmitter 1820. The low-power device 1800 may be configured to execute some or all of the steps illustrated in FIGS. 11 to 13.

The receiver 1810 and the transmitter 1820 may be implemented as a communication assembly, which may be a communication chip. The communication assembly may be referred to as a transceiver.

In some embodiments, the receiver 1810 may be configured to implement the functions and steps of the first receiving module 1610 and/or the second receiving module 1650. In some embodiments, the receiver 1810 may be implemented as a first receiver 1811 and a second receiver 1812.

In some embodiments, the transmitter 1820 may be configured to implement the functions and steps of the transmitting module 1670. In some embodiments, the transmitter 1820 may be implemented as a first transmitter 1821 and a second transmitter 1822.

In some embodiments, the low-power device 1800 further includes a processor 1830. The processor 1830 includes one or more processing cores, and the processor 1830 executes various functional applications and performs information processing by running software programs and modules.

In some embodiments, the low-power device 1800 further includes a memory 1840. The memory 1840 may be configured to store at least one instruction, and the processor 1810 is configured to execute the at least one instruction to perform the steps in the above method embodiments. In addition, the memory 1804 may be implemented by any type of volatile or non-volatile storage device or a combination thereof. The volatile or non-volatile storage device includes, but is not limited to: a magnetic disk, an optical disk, an EEPROM, an EPROM, an SRAM, a ROM, a magnetic memory, a flash memory, and a PROM.

In some embodiments, the low-power device 1800 further includes a bus (not shown). In some embodiments, the memory 1840 is communicably connected to the processor 1830 via the bus.

In some embodiments, the receiver 1810 independently receives signals/data, the processor 1830 controls the receiver 1810 to receive signals/data, the processor 1830 requests the receiver 1810 to receive signals/data, or the processor 1830 cooperates with the receiver 1810 to receive signals/data.

In some embodiments, the transmitter 1820 independently transmits signals/data, the processor 1830 controls the transmitter 1820 to transmit signals/data, the processor 1830 requests the transmitter 1820 to transmit signals/data, or the processor 1830 cooperates with the transmitter 1820 to transmit signals/data.

In some embodiments, the first receiver 1811 is implemented as a WUR, and/or the second receiver 1812 is implemented as a primary receiver.

In some embodiments, the receiver 1810 is implemented as a combined receiver of a WUR and a primary receiver.

In some embodiments, the first transmitter 1821 is implemented as a primary transmitter, and/or the second transmitter 1822 is implemented as a backscatter transmitter.

In some embodiments, the transmitter 1820 is implemented as a combined transmitter of a primary transmitter and a backscatter transmitter.

In some embodiments, the processor 1830 and the receiver 1810 may be implemented as a single module, or the processor 1830 may be implemented as a part of the receiver 1810.

In some embodiments, the processor 1830 and the transmitter 1820 may be implemented as a single module, or the processor 1830 may be implemented as a part of the transmitter 1820.

In some embodiments, the low-power device 1800 includes one or more processors 1830, wherein different processors are configured to perform the same steps or different steps in the above processing-related steps.

In some embodiments of the present disclosure, a computer-readable storage medium is further provided. The computer-readable storage medium stores at least one program. The at least one program, when loaded and run by the processor, causes the processor to perform the wake-up method according to each of the above method embodiments.

In some embodiments of the present disclosure, a chip is further provided. The chip includes programmable logic circuitry and/or one or more program instructions. The chip, when running on a communication device, causes the communication device to perform the wake-up method according to each of the above method embodiments.

In some embodiments of the present disclosure, a computer program product is further provided. The computer program product, when running on a processor of a computer device, causes the computer device to perform the above wake-up method.

In some embodiments of the present disclosure, a computer program is further provided. The computer program includes one or more computer instructions. The one or more computer instructions, when executed by a processor of a computer device, cause the computer device to perform the above wake-up method.

A person of ordinary skill in the art may be aware that all or part of the steps for implementing the above embodiments may be completed by hardware, or by a program instructing relevant hardware. The program may be stored in a computer-readable storage medium. The storage medium may be a ROM, a magnetic disk, an optical disk, or the like.

Described above are merely optional embodiments of the present disclosure and are not intended to limit the present disclosure. Any modifications, equivalent substitutions, improvements, or the like, made within the spirit and principle of the present disclosure shall fall within the protection scope of the present disclosure.

## Claims

1. A wake-up method, performed by a network device, the method comprising:
transmitting a first signal and a second signal, wherein the first signal and the second signal are used to wake up a primary receiver of a low-power device, and the second signal carries wake-up information.

2. The method according to claim 1, wherein the first signal is periodically or aperiodically transmitted.

3. The method according to claim 1 or 2, wherein
at least one first signal is present within a transmission period; or
at least one first signal and at least one second signal are present within a transmission period.

4. The method according to any one of claims 1 to 3, wherein
the first signal corresponds to n time-domain units, and the second signal corresponds to m time-domain units;
wherein n is equal to or different from m, n is an integer greater than or equal to 1, and m is an integer greater than or equal to 1.

5. The method according to claim 4, wherein
the first signal is generated by performing a first transform on n groups of first frequency-domain signals respectively, wherein the n groups of first frequency-domain signals are in one-to-one correspondence with the n time-domain units; and
the second signal is generated by performing the first transform on m groups of second frequency-domain signals respectively, wherein the m groups of second frequency-domain signals are in one-to-one correspondence with the m time-domain units;
wherein the first transform is a transform of a signal from a frequency domain to a time domain.

6. The method according to claim 5, wherein the first transform comprises one of:
an inverse Fourier transform, IFT;
an inverse fast Fourier transform, IFFT;
an inverse Laplace transform; or
an inverse z-transform.

7. The method according to claim 4 or 5, wherein
the n groups of first frequency-domain signals are generated by performing a second transform on n groups of bits respectively; and
the m groups of second frequency-domain signals are generated by performing the second transform on m groups of bits respectively;
wherein a group of bits in the n or m groups of bits comprises one or more bits, and the second transform is a transform of a signal from the time domain to the frequency domain.

8. The method according to claim 7, wherein the second transform comprises one of:
a Fourier transform, FT;
a fast FT, FFT;
a discrete FT, DFT;
a Laplace transform; or
a z-transform.

9. The method according to claim 4, wherein
the first signal is generated by performing modulation on n groups of bits respectively, wherein the n groups of bits are in one-to-one correspondence with the n time-domain units; and
the second signal is generated by performing modulation on m groups of bits respectively, wherein the m groups of bits are in one-to-one correspondence with the m time-domain units;
wherein a group of bits in the n or m groups of bits comprises one or more bits.

10. The method according to any one of claims 4 to 9, wherein the n time-domain units are different from the m time-domain units.

11. The method according to any one of claims 1 to 10, wherein
the first signal corresponds to a first frequency-domain resource, and the second signal corresponds to a second frequency-domain resource;
wherein a width of the first frequency-domain resource is different from a width of the second frequency-domain resource; and/or
a center frequency point of the first frequency-domain resource is aligned with a center frequency point of the second frequency-domain resource; and/or
a frequency-domain start position of the first frequency-domain resource is different from a frequency-domain start position of the second frequency-domain resource; and/or
a frequency-domain end position of the first frequency-domain resource is different from a frequency-domain end position of the second frequency-domain resource.

12. A wake-up method, performed by a low-power device, the method comprising:
receiving a first signal and a second signal, wherein the first signal and the second signal are used to wake up a primary receiver of the low-power device, and the second signal carries wake-up information.

13. The method according to claim 12, wherein the first signal is periodically or aperiodically transmitted.

14. The method according to claim 12 or 13, wherein
at least one first signal is present within a transmission period; or
at least one first signal and at least one second signal are present within a transmission period.

15. The method according to any one of claims 12 to 14, wherein
the first signal corresponds to n time-domain units, and the second signal corresponds to m time-domain units;
wherein n is equal to or different from m, n is an integer greater than or equal to 1, and m is an integer greater than or equal to 1.

16. The method according to claim 15, wherein
the first signal is generated by performing a first transform on n groups of first frequency-domain signals respectively, wherein the n groups of first frequency-domain signals are in one-to-one correspondence with the n time-domain units; and
the second signal is generated by performing the first transform on m groups of second frequency-domain signals respectively, wherein the m groups of second frequency-domain signals are in one-to-one correspondence with the m time-domain units;
wherein the first transform is a transform of a signal from a frequency domain to a time domain.

17. The method according to claim 16, wherein the first transform comprises one of:
an inverse Fourier transform, IFT;
an inverse fast Fourier transform, IFFT;
an inverse Laplace transform; or
an inverse z-transform.

18. The method according to claim 16 or 17, wherein
the n groups of first frequency-domain signals are generated by performing a second transform on n groups of bits respectively; and
the m groups of second frequency-domain signals are generated by performing the second transform on m groups of bits respectively;
wherein a group of bits in the n or m groups of bits comprises one or more bits, and the second transform is a transform of a signal from the time domain to the frequency domain.

19. The method according to claim 18, wherein the second transform comprises one of:
a Fourier transform, FT;
a fast FT, FFT;
a discrete FT, DFT;
a Laplace transform; or
a z-transform.

20. The method according to claim 15, wherein
the first signal is generated by performing modulation on n groups of bits respectively, wherein the n groups of bits are in one-to-one correspondence with the n time-domain units; and
the second signal is generated by performing modulation on m groups of bits respectively, wherein the m groups of bits are in one-to-one correspondence with the m time-domain units;
wherein a group of bits in the n or m groups of bits comprises one or more bits.

21. The method according to any one of claims 15 to 20, wherein the n time-domain units are different from the m time-domain units.

22. The method according to any one of claims 12 to 21, wherein
the first signal corresponds to a first frequency-domain resource, and the second signal corresponds to a second frequency-domain resource;
wherein a width of the first frequency-domain resource is different from a width of the second frequency-domain resource; and/or
a center frequency point of the first frequency-domain resource is aligned with a center frequency point of the second frequency-domain resource; and/or
a frequency-domain start position of the first frequency-domain resource is different from a frequency-domain start position of the second frequency-domain resource; and/or
a frequency-domain end position of the first frequency-domain resource is different from a frequency-domain end position of the second frequency-domain resource.

23. The method according to any one of claims 12 to 22, wherein receiving the first signal and the second signal comprises:
receiving the first signal and performing signal processing based on the first signal; and
receiving the second signal based on a result of the signal processing;
wherein the signal processing comprises at least one of time-domain synchronization, frequency-domain synchronization, or automatic gain control, AGC.

24. The method according to any one of claims 12 to 23, further comprising:
activating the primary receiver of the low-power device based on at least one of the first signal or the second signal.

25. The method according to claim 24, wherein activating the primary receiver of the low-power device based on at least one of the first signal or the second signal comprises at least one of:
activating the primary receiver of the low-power device based on signal quality of the first signal;
activating the primary receiver of the low-power device based on signal quality of the second signal; or
activating the primary receiver of the low-power device based on the wake-up information carried by the second signal.

26. The method according to claim 24 or 25, wherein
the wake-up information comprises at least one of time-domain resource information or frequency-domain resource information; and
the method further comprises at least one of:
receiving data using the primary receiver based on at least one of the time-domain resource information or the frequency-domain resource information;
transmitting data using a primary transmitter of the low-power device based on at least one of the time-domain resource information or the frequency-domain resource information; or
transmitting data using a backscatter transmitter of the low-power device based on at least one of the time-domain resource information or the frequency-domain resource information.

27. A wake-up apparatus, comprising:
a transmitting module, configured to transmit a first signal and a second signal, wherein the first signal and the second signal are used to wake up a primary receiver of a low-power device, and the second signal carries wake-up information.

28. The apparatus according to claim 27, wherein the first signal is periodically or aperiodically transmitted.

29. The apparatus according to claim 27 or 28, wherein
at least one first signal is present within a transmission period; or
at least one first signal and at least one second signal are present within a transmission period.

30. The apparatus according to any one of claims 27 to 29, wherein
the first signal corresponds to n time-domain units, and the second signal corresponds to m time-domain units;
wherein n is equal to or different from m, n is an integer greater than or equal to 1, and m is an integer greater than or equal to 1.

31. The apparatus according to claim 30, wherein
the first signal is generated by performing a first transform on n groups of first frequency-domain signals respectively, wherein the n groups of first frequency-domain signals are in one-to-one correspondence with the n time-domain units; and
the second signal is generated by performing the first transform on m groups of second frequency-domain signals respectively, wherein the m groups of second frequency-domain signals are in one-to-one correspondence with the m time-domain units;
wherein the first transform is a transform of a signal from a frequency domain to a time domain.

32. The apparatus according to claim 31, wherein the first transform comprises one of:
an inverse Fourier transform, IFT;
an inverse fast Fourier transform, IFFT;
an inverse Laplace transform; or
an inverse z-transform.

33. The apparatus according to claim 31 or 32, wherein
the n groups of first frequency-domain signals are generated by performing a second transform on n groups of bits respectively; and
the m groups of second frequency-domain signals are generated by performing the second transform on m groups of bits respectively;
wherein a group of bits in the n or m groups of bits comprises one or more bits, and the second transform is a transform of a signal from the time domain to the frequency domain.

34. The apparatus according to claim 33, wherein the second transform comprises one of:
a Fourier transform, FT;
a fast FT, FFT;
a discrete FT, DFT;
a Laplace transform; or
a z-transform.

35. The apparatus according to claim 30, wherein
the first signal is generated by performing modulation n groups of bits respectively, wherein the n groups of bits are in one-to-one correspondence with the n time-domain units; and
the second signal is generated by performing modulation on m groups of bits respectively, wherein the m groups of bits are in one-to-one correspondence with the m time-domain units;
wherein a group of bits in the n or m groups of bits comprises one or more bits.

36. The apparatus according to any one of claims 30 to 35, wherein the n time-domain units are different from the m time-domain units.

37. The apparatus according to any one of claims 27 to 36, wherein
the first signal corresponds to a first frequency-domain resource, and the second signal corresponds to a second frequency-domain resource;
wherein a width of the first frequency-domain resource is different from a width of the second frequency-domain resource; and/or
a center frequency point of the first frequency-domain resource is aligned with a center frequency point of the second frequency-domain resource; and/or
a frequency-domain start position of the first frequency-domain resource is different from a frequency-domain start position of the second frequency-domain resource; and/or
a frequency-domain end position of the first frequency-domain resource is different from a frequency-domain end position of the second frequency-domain resource.

38. A wake-up apparatus, comprising:
a first receiving module, configured to receive a first signal and a second signal, wherein the first signal and the second signal are used to wake up a primary receiver of the low-power device, and the second signal carries wake-up information.

39. The apparatus according to claim 38, wherein the first signal is periodically or aperiodically transmitted.

40. The apparatus according to claim 38 or 39, wherein
at least one first signal is present within a transmission period; or
at least one first signal and at least one second signal are present within a transmission period.

41. The apparatus according to any one of claims 38 to 40, wherein
the first signal corresponds to n time-domain units, and the second signal corresponds to m time-domain units;
wherein n is equal to or different from m, n is an integer greater than or equal to 1, and m is an integer greater than or equal to 1.

42. The apparatus according to claim 41, wherein
the first signal is generated by performing a first transform on n groups of first frequency-domain signals respectively, wherein the n groups of first frequency-domain signals are in one-to-one correspondence with the n time-domain units; and
the second signal is generated by performing the first transform on m groups of second frequency-domain signals respectively, wherein the m groups of second frequency-domain signals are in one-to-one correspondence with the m time-domain units;
wherein the first transform is a transform of a signal from a frequency domain to a time domain.

43. The apparatus according to claim 42, wherein the first transform comprises one of:
an inverse Fourier transform, IFT;
an inverse fast Fourier transform, IFFT;
an inverse Laplace transform; or
an inverse z-transform.

44. The apparatus according to claim 42 or 43, wherein
the n groups of first frequency-domain signals are generated by performing a second transform on n groups of bits respectively; and
the m groups of second frequency-domain signals are generated by performing the second transform on m groups of bits respectively;
wherein a group of bits in the n or m groups of bits comprises one or more bits, and the second transform is a transform of a signal from the time domain to the frequency domain.

45. The apparatus according to claim 44, wherein the second transform comprises one of:
a Fourier transform, FT;
a fast FT, FFT;
a discrete FT, DFT;
a Laplace transform; or
a z-transform.

46. The apparatus according to claim 41, wherein
the first signal is generated by performing modulation on n groups of bits respectively, wherein the n groups of bits are in one-to-one correspondence with the n time-domain units; and
the second signal is generated by performing modulation on m groups of bits respectively, wherein the m groups of bits are in one-to-one correspondence with the m time-domain units;
wherein a group of bits in the n or m groups of bits comprises one or more bits.

47. The apparatus according to any one of claims 41 to 46, wherein the n time-domain units are different from the m time-domain units.

48. The apparatus according to any one of claims 38 to 47, wherein
the first signal corresponds to a first frequency-domain resource, and the second signal corresponds to a second frequency-domain resource;
wherein a width of the first frequency-domain resource is different from a width of the second frequency-domain resource; and/or
a center frequency point of the first frequency-domain resource is aligned with a center frequency point of the second frequency-domain resource; and/or
a frequency-domain start position of the first frequency-domain resource is different from a frequency-domain start position of the second frequency-domain resource; and/or
a frequency-domain end position of the first frequency-domain resource is different from a frequency-domain end position of the second frequency-domain resource.

49. The apparatus according to any one of claims 38 to 48, further comprising:
a processing module, configured to perform signal processing based on the first signal;
wherein
the first receiving module is further configured to receive the second signal based on a result of the signal processing; and
the signal processing comprises at least one of time-domain synchronization, frequency-domain synchronization, or automatic gain control, AGC.

50. The apparatus according to any one of claims 38 to 49, further comprising:
a processing module and a second receiving module, wherein the processing module is configured to activate the second receiving module based on at least one of the first signal or the second signal.

51. The apparatus according to claim 50, wherein the processing module is further configured to perform at least one of:
activating the second receiving module based on signal quality of the first signal;
activating the second receiving module based on signal quality of the second signal; or
activating the second receiving module based on the wake-up information carried by the second signal.

52. The apparatus according to claim 50 or 51, further comprising:
a transmitting module, configured to backscatter at least one of data or a signal;
wherein the second receiving module is further configured to receive at least one of data or a signal.

53. A network device, comprising:
a processor;
a transmitter communicably connected to the processor; and
a memory, configured to store one or more instructions executable by the processor;
wherein the transmitter is configured to transmit a first signal and a second signal, wherein the first signal and the second signal are used to wake up a primary receiver of a low-power device, and the second signal carries wake-up information.

54. The network device according to claim 53, wherein the first signal is periodically or aperiodically transmitted.

55. The network device according to claim 53 or 54, wherein
at least one first signal is present within a transmission period; or
at least one first signal and at least one second signal are present within a transmission period.

56. The network device according to any one of claims 53 to 55, wherein
the first signal corresponds to n time-domain units, and the second signal corresponds to m time-domain units;
wherein n is equal to or different from m, n is an integer greater than or equal to 1, and m is an integer greater than or equal to 1.

57. The network device according to claim 56, wherein
the first signal is generated by performing a first transform on n groups of first frequency-domain signals respectively, wherein the n groups of first frequency-domain signals are in one-to-one correspondence with the n time-domain units; and
the second signal is generated by performing the first transform on m groups of second frequency-domain signals respectively, wherein the m groups of second frequency-domain signals are in one-to-one correspondence with the m time-domain units;
wherein the first transform is a transform of a signal from a frequency domain to a time domain.

58. The network device according to claim 57, wherein the first transform comprises one of:
an inverse Fourier transform, IFT;
an inverse fast Fourier transform, IFFT;
an inverse Laplace transform; or
an inverse z-transform.

59. The network device according to claim 57 or 58, wherein
the n groups of first frequency-domain signals are generated by performing a second transform on n groups of bits respectively; and
the m groups of second frequency-domain signals are generated by performing the second transform on m groups of bits respectively;
wherein a group of bits in the n or m groups of bits comprises one or more bits, and the second transform is a transform of a signal from the time domain to the frequency domain.

60. The network device according to claim 59, wherein the second transform comprises one of:
a Fourier transform, FT;
a fast FT, FFT;
a discrete FT, DFT;
a Laplace transform; or
a z-transform.

61. The network device according to claim 56, wherein
the first signal is generated by performing modulation on n groups of bits respectively, wherein the n groups of bits are in one-to-one correspondence with the n time-domain units; and
the second signal is generated by performing modulation on m groups of bits respectively, wherein the m groups of bits are in one-to-one correspondence with the m time-domain units;
wherein a group of bits in the n or m groups of bits comprises one or more bits.

62. The network device according to any one of claims 53 to 61, wherein the n time-domain units are different from the m time-domain units.

63. The network device according to any one of claims 53 to 62, wherein
the first signal corresponds to a first frequency-domain resource, and the second signal corresponds to a second frequency-domain resource;
wherein a width of the first frequency-domain resource is different from a width of the second frequency-domain resource; and/or
a center frequency point of the first frequency-domain resource is aligned with a center frequency point of the second frequency-domain resource; and/or
a frequency-domain start position of the first frequency-domain resource is different from a frequency-domain start position of the second frequency-domain resource; and/or
a frequency-domain end position of the first frequency-domain resource is different from a frequency-domain end position of the second frequency-domain resource.

64. A low-power device, comprising:
a first receiver, configured to receive a first signal and a second signal, wherein the first signal and the second signal are used to wake up a primary receiver of the low-power device, and the second signal carries wake-up information.

65. The low-power device according to claim 64, wherein the first signal is periodically or aperiodically transmitted.

66. The low-power device according to claim 64 or 65, wherein
at least one first signal is present within a transmission period; or
at least one first signal and at least one second signal are present within a transmission period.

67. The low-power device according to any one of claims 64 to 66, wherein
the first signal corresponds to n time-domain units, and the second signal corresponds to m time-domain units;
wherein n is equal to or different from m, n is an integer greater than or equal to 1, and m is an integer greater than or equal to 1.

68. The low-power device according to claim 67, wherein
the first signal is generated by performing a first transform on n groups of first frequency-domain signals respectively, wherein the n groups of first frequency-domain signals are in one-to-one correspondence with the n time-domain units; and
the second signal is generated by performing the first transform on m groups of second frequency-domain signals respectively, wherein the m groups of second frequency-domain signals are in one-to-one correspondence with the m time-domain units;
wherein the first transform is a transform of a signal from a frequency domain to a time domain.

69. The low-power device according to claim 68, wherein the first transform comprises one of:
an inverse Fourier transform, IFT;
an inverse fast Fourier transform, IFFT;
an inverse Laplace transform; or
an inverse z-transform.

70. The low-power device according to claim 68 or 69, wherein
the n groups of first frequency-domain signals are generated by performing a second transform on n groups of bits respectively; and
the m groups of second frequency-domain signals are generated by performing the second transform on m groups of bits respectively;
wherein a group of bits in the n or m groups of bits comprises one or more bits, and the second transform is a transform of a signal from the time domain to the frequency domain.

71. The low-power device according to claim 70, wherein the second transform comprises one of:
a Fourier transform, FT;
a fast FT, FFT;
a discrete FT, DFT;
a Laplace transform; or
a z-transform.

72. The low-power device according to claim 67, wherein
the first signal is generated by performing modulation on n groups of bits respectively, wherein the n groups of bits are in one-to-one correspondence with the n time-domain units; and
the second signal is generated by performing modulation on m groups of bits respectively, wherein the m groups of bits are in one-to-one correspondence with the m time-domain units;
wherein a group of bits in the n or m groups of bits comprises one or more bits.

73. The low-power device according to any one of claims 64 to 72, wherein the n time-domain units are different from the m time-domain units.

74. The low-power device according to any one of claims 64 to 73, wherein
the first signal corresponds to a first frequency-domain resource, and the second signal corresponds to a second frequency-domain resource;
wherein a width of the first frequency-domain resource is different from a width of the second frequency-domain resource; and/or
a center frequency point of the first frequency-domain resource is aligned with a center frequency point of the second frequency-domain resource; and/or
a frequency-domain start position of the first frequency-domain resource is different from a frequency-domain start position of the second frequency-domain resource; and/or
a frequency-domain end position of the first frequency-domain resource is different from a frequency-domain end position of the second frequency-domain resource.

75. The low-power device according to any one of claims 64 to 74, further comprising:
a processor, configured to perform signal processing based on the first signal;
wherein
the first receiver is further configured to receive the second signal based on a result of the signal processing; and
the signal processing comprises at least one of time-domain synchronization, frequency-domain synchronization, or automatic gain control, AGC.

76. The low-power device according to any one of claims 64 to 75, further comprising:
a processor and a second receiver, wherein the processor is configured to activate the second receiver based on at least one of the first signal or the second signal.

77. The low-power device according to claim 76, wherein the processor is further configured to:
activate the primary receiver of the low-power device based on signal quality of the first signal; and/or
activate the primary receiver of the low-power device based on signal quality of the second signal; and/or
activate the primary receiver of the low-power device based on the wake-up information carried by the second signal.

78. The low-power device according to claim 76 or 77, wherein
the second receiver is configured to receive at least one of data or a signal; and/or
the low-power device further comprises a transmitter for backscattering.

79. A computer-readable storage medium, storing one or more executable instructions, wherein the one or more executable instructions, when loaded and executed by a processor, cause the processor to perform the wake-up method as defined in any one of claims 1 to 11 or 12 to 26.

80. A chip, comprising programmable logic circuitry or one or more programs, wherein the chip is configured to perform the wake-up method as defined in any one of claims 1 to 11 or 12 to 26.

81. A computer program product, comprising one or more computer instructions stored in a computer-readable storage medium,
wherein the one or more computer instructions, when read by a processor of a computer device from the computer-readable storage medium and executed by the processor, cause the computer device to perform the wake-up method as defined in any one of claims 1 to 11 or 12 to 26.

82. A computer program, comprising one or more computer instructions, wherein the one or more computer instructions, when executed by a processor of a computer device, cause the computer device to perform the wake-up method as defined in any one of claims 1 to 11 or 12 to 26.
